# EUROPEAN PATENT APPLICATION

(11) **EP 4 620 607 A1**
(43) Date of publication of application: **24.09.2025**
(21) Application number: 23940600.2
(22) Date of filing: 05.06.2023
(51) Int. Cl.: B23K 20/12

(54) **FRICTION STIR WELDING METHOD, AUTOMOBILE COMPONENT MANUFACTURING METHOD, MACHINE TOOL, AND PROGRAM**

(71) Applicant: Yamazaki Mazak Corporation, Niwa-gun, Aichi 480-0197 (JP)
(72) Inventor: MATSUBARA, Eiji, Niwa-gun, Aichi 480-0197 (JP); MINATANI, Masayasu, Niwa-gun, Aichi 480-0197 (JP); NIWA, Kentaro, Niwa-gun, Aichi 480-0197 (JP); KIRA, Yoshihiro, Niwa-gun, Aichi 480-0197 (JP)
(74) Representative: TBK
(86) International application number: PCT/JP2023/020872
(87) International publication number: WO 2024/252493

(57) **Abstract**

Friction stir welding is performed for welding a first workpiece and a second workpiece together, the first workpiece including a recessed portion defined by a plurality of surfaces including a first surface and a second surface, the first surface having a height gradually decreasing in a first direction, the second surface having a height gradually increasing in the first direction. A friction stir welding method includes: moving a friction stir welding tool in a second direction to follow a change in the height of the first surface, in a case where a depth direction of the recessed portion is defined as the second direction, while moving the friction stir welding tool in the first direction; and moving the friction stir welding tool in a third direction to follow a change in the height of the second surface, in a case where a direction opposite to the second direction is defined as the third direction, while moving the friction stir welding tool in the first direction. Also in the friction stir welding method, a position of the friction stir welding tool is controlled to reduce a fluctuation in an axial load received by the friction stir welding tool from the first workpiece and the second workpiece.

## Description

### Technical Field

The present invention relates to a friction stir welding method, a production method of an automotive component, a machine tool, and a program.

### Background Art

A friction stir welding method is known.

As a related technique, Patent Literature 1 discloses a friction stir welding method. The friction stir welding method described in Patent Literature 1 is performed using a welder including a support and a probe configured to be movable forward and backward in an axial direction relative to the support. In the friction stir welding method described in Patent Literature 1, a protrusion amount of the probe relative to the support is configured to change in accordance with a change in depth of a welded portion.

### Citation List

### Patent Literature

PTL1: JP H10-71478 A.

### Summary of Invention

### Technical Problem

It is an object of the present invention to provide a friction stir welding method, a production method of an automotive component, a machine tool, and a program that are capable of smoothly performing friction stir welding for welding together a first workpiece including a recessed portion and a second workpiece that is overlaid with the first workpiece. In addition, an optional and additional object of the present invention is to provide a technique for producing the automotive component such as a battery case, an inverter case, or a motor case, by performing the friction stir welding for welding together the first workpiece including the recessed portion and the second workpiece.

### Solution to Problem

A friction stir welding method according to some embodiments includes steps of: preparing a first workpiece including a recessed portion defined by a plurality of surfaces including a first surface and a second surface, the first surface having a height gradually decreasing in a first direction, the second surface having a height gradually increasing in the first direction; preparing a second workpiece; overlaying the first workpiece with the second workpiece to form a first region in which the first workpiece and the second workpiece are in contact with each other, a second region in which a gap between the first surface and the second workpiece gradually increases from zero in the first direction, and a third region in which another gap between the second surface and the second workpiece gradually decreases to zero in the first direction; and performing friction stir welding for welding the first workpiece and the second workpiece together using a friction stir welding tool. The step of performing the friction stir welding for welding the first workpiece and the second workpiece together includes: moving the friction stir welding tool in the first direction for a probe of the friction stir welding tool to traverse at least part of the first region; moving the friction stir welding tool in a second direction to follow a change in the height of the first surface, in a case where a depth direction of the recessed portion is defined as the second direction, while moving the friction stir welding tool in the first direction for the probe to traverse the second region; and moving the friction stir welding tool in a third direction to follow a change in the height of the second surface, in a case where a direction opposite to the second direction is defined as the third direction, while moving the friction stir welding tool in the first direction for the probe to traverse the third region. A position of the friction stir welding tool is controlled to reduce a fluctuation in an axial load received by the friction stir welding tool from the first workpiece and the second workpiece, when the probe moves in the first direction traversing each the second region and the third region.

A production method of an automotive component according to some embodiments, the production method includes steps of: preparing a first component including a recessed portion defined by a plurality of surfaces including a first surface and a second surface, the first surface having a height gradually decreasing in a first direction, the second surface having a height gradually increasing in the first direction; preparing a second component; overlaying the first component with the second component to form a first region in which the first component and the second component are in contact with each other, a second region in which a gap between the first surface and the second component gradually increases from zero in the first direction, and a third region in which another gap between the second surface and the second component gradually decreases to zero in the first direction; and performing friction stir welding for welding the first component and the second component together using a friction stir welding tool. The step of performing the friction stir welding for welding the first component and the second component together includes: moving the friction stir welding tool in the first direction for a probe of the friction stir welding tool to traverse at least part of the first region; moving the friction stir welding tool in a second direction to follow a change in the height of the first surface, in a case where a depth direction of the recessed portion is defined as the second direction, while moving the friction stir welding tool in the first direction for the probe to traverse the second region; and moving the friction stir welding tool in a third direction to follow a change in the height of the second surface, in a case where a direction opposite to the second direction is defined as the third direction, while moving the friction stir welding tool in the first direction for the probe to traverse the third region. A position of the friction stir welding tool is controlled to reduce a fluctuation in an axial load received by the friction stir welding tool from the first component and the second component, when the probe moves in the first direction traversing each the second region and the third region.

A machine tool according to some embodiments includes: a workpiece support member configured to support a first workpiece and a second workpiece; a machining head configured to support a probe of a friction stir welding tool to be rotatable about a rotation axis; a rotation drive configured to rotate the probe about the rotation axis; a mover configured to move the machining head relative to the workpiece support member; and a controller configured to control the rotation drive and the mover. The controller is capable of performing a friction stir welding mode of performing friction stir welding for welding the first workpiece and the second workpiece together with the second workpiece overlaid on the first workpiece, the first workpiece including a recessed portion defined by a plurality of surfaces including a first surface and a second surface, the first surface having a height gradually decreasing in a first direction, the second surface having a height gradually increasing in the first direction. The friction stir welding mode includes: moving the friction stir welding tool in the first direction for the probe to traverse at least part of a first region in which the first workpiece and the second workpiece are in contact with each other; moving the friction stir welding tool in a second direction to follow a change in the height of the first surface, in a case where a depth direction of the recessed portion is defined as the second direction, while moving the friction stir welding tool in the first direction for the probe to traverse a second region in which a gap between the first surface and the second workpiece gradually increases from zero in the first direction; and moving the friction stir welding tool in a third direction to follow a change in the height of the second surface, in a case where a direction opposite to the second direction is defined as the third direction, while moving the friction stir welding tool in the first direction for the probe to traverse a third region in which another gap between the second surface and the second workpiece gradually decreases to zero in the first direction. The controller controls a position of the friction stir welding tool to reduce a fluctuation in an axial load received by the friction stir welding tool from the first workpiece and the second workpiece, when the probe moves in the first direction traversing each the second region and the third region.

A program according to some embodiments is a program for causing a machine tool to perform a friction stir welding method including steps of: preparing a first workpiece including a recessed portion defined by a plurality of surfaces including a first surface and a second surface, the first surface having a height gradually decreasing in a first direction, the second surface having a height gradually increasing in the first direction; and performing friction stir welding for welding the first workpiece and a second workpiece together using a friction stir welding tool with the first workpiece and the second workpiece overlaid with each other. The step of preparing the first workpiece includes forming the recessed portion using a cutting tool. The step of performing the friction stir welding for welding the first workpiece and the second workpiece together includes: moving the friction stir welding tool in the first direction for a probe of the friction stir welding tool to traverse at least part of a first region in which the first workpiece and the second workpiece are in contact with each other; moving the friction stir welding tool in a second direction to follow a change in the height of the first surface, in a case where a depth direction of the recessed portion is defined as the second direction, while moving the friction stir welding tool in the first direction for the probe to traverse a second region in which a gap between the first surface and the second workpiece gradually increases from zero in the first direction; and moving the friction stir welding tool in a third direction to follow a change in the height of the second surface, in a case where a direction opposite to the second direction is defined as the third direction, while moving the friction stir welding tool in the first direction for the probe to traverse a third region in which another gap between the second surface and the second workpiece gradually decreases to zero in the first direction. The step of performing the friction stir welding for welding the first workpiece and the second workpiece together includes: controlling a position of the friction stir welding tool to reduce a fluctuation in an axial load received by the friction stir welding tool from the first workpiece and the second workpiece, when the probe moves in the first direction traversing each the second region and the third region.

### Effects of Invention

The present invention provides a friction stir welding method, a production method of an automotive component, a machine tool, and a program that are capable of smoothly performing friction stir welding for welding together a first workpiece including a recessed portion and a second workpiece that is overlaid with the first workpiece.

### Brief Description of Drawings

[FIG. 1] FIG. 1 is a schematic cross-sectional view of a first workpiece, schematically illustrating one example.
[FIG. 2] FIG. 2 is a schematic cross-sectional view of the first workpiece, schematically illustrating another example.
[FIG. 3] FIG. 3 is a schematic cross-sectional view of a second workpiece, schematically illustrating one example.
[FIG. 4] FIG. 4 is a schematic cross-sectional view of a state in which the first workpiece and the second workpiece are overlaid with each other.
[FIG. 5] FIG. 5 is a schematic cross-sectional view of a state in which a probe is moving in a first direction traversing at least part of a first region.
[FIG. 6] FIG. 6 is a schematic cross-sectional view of a state in which the probe is moving in the first direction traversing a second region.
[FIG. 7] FIG. 7 is a schematic cross-sectional view of a state in which the probe is moving in the first direction traversing a fourth region.
[FIG. 8] FIG. 8 is a schematic cross-sectional view of a state in which the probe is moving in the first direction traversing a third region.
[FIG. 9] FIG. 9 is a schematic cross-sectional view of a state in which the probe is moving in the first direction traversing at least part of a fifth region.
[FIG. 10] FIG. 10 is a schematic cross-sectional view of a welded product produced by friction stir welding, schematically illustrating one example.
[FIG. 11] FIG. 11 is a flowchart of a friction stir welding method according to an embodiment.
[FIG. 12] FIG. 12 is a schematic perspective view of a state in which a plate is overlaid with a case body.
[FIG. 13] FIG. 13 is a schematic perspective view of an automotive component produced by friction stir welding, schematically illustrating one example.
[FIG. 14] FIG. 14 is a schematic perspective view of a state in which the plate is overlaid with the case body.
[FIG. 15] FIG. 15 is a schematic perspective view of the automotive component produced by the friction stir welding, schematically illustrating another example.
[FIG. 16] FIG. 16 is a schematic perspective view of the automotive component produced by the friction stir welding, schematically illustrating further another example.
[FIG. 17] FIG. 17 is a schematic illustration of a machine tool according to a first embodiment.
[FIG. 18] FIG. 18 is a schematic illustration of the machine tool according to a first modification of the first embodiment.
[FIG. 19] FIG. 19 is a schematic illustration of the machine tool according to a second modification of the first embodiment.
[FIG. 20] FIG. 20 is a schematic illustration of the machine tool according to a third modification of the first embodiment.
[FIG. 21] FIG. 21 is a schematic cross-sectional view of the first workpiece including a welded portion, schematically illustrating one example.
[FIG. 22] FIG. 22 is a schematic cross-sectional view of a state in which the welded portion and a part around the welded portion are cut to form a recess.
[FIG. 23] FIG. 23 is a schematic illustration of a state in which a first stepped portion is cut to form a first surface having a height gradually decreasing in the first direction.
[FIG. 24] FIG. 24 is a schematic illustration of a state in which a second stepped portion is cut to form a second surface having a height gradually increasing in the first direction.
[FIG. 25] FIG. 25 is a schematic cross-sectional view of a friction stir welding method in a first comparative example.
[FIG. 26] FIG. 26 is a schematic cross-sectional view of a friction stir welding method in a second comparative example.
[FIG. 27] FIG. 27 is a schematic cross-sectional view of a state in which the welded portion and a part around the welded portion are cut to form the first surface directly.
[FIG. 28] FIG. 28 is a schematic cross-sectional view of a state in which the welded portion and a part around the welded portion are cut to form a recessed portion including the first surface and a second surface directly.
[FIG. 29] FIG. 29 is a schematic perspective view of a state in which the recessed portion extends along a fourth direction.
[FIG. 30] FIG. 30 is a schematic perspective view of a state in which an end portion on a fourth direction side of the recessed portion is open with the first workpiece overlaid with the second workpiece.
[FIG. 31] FIG. 31 is a schematic perspective view of the probe moving along a curved path, schematically illustrating an example.
[FIG. 32] FIG. 32 is a schematic illustration of a machine tool according to a fourth modification of the first embodiment.
[FIG. 33] FIG. 33 is a schematic illustration of a state in which devices to be controlled can be controlled by a controller.
[FIG. 34] FIG. 34 is a schematic cross-sectional view of a first movement path that traverses the recessed portion.
[FIG. 35] FIG. 35 is a schematic illustration of a machine tool according to a second embodiment.
[FIG. 36] FIG. 36 is a schematic perspective view of part of the machine tool according to the second embodiment.
[FIG. 37] FIG. 37 is a schematic illustration of the machine tool according to the second embodiment.
[FIG. 38] FIG. 38 is a schematic illustration of a storage medium storing a program, schematically illustrating one example.
[FIG. 39] FIG. 39 is a schematic illustration of a machine tool according to a modification of the embodiment.
[FIG. 40] FIG. 40 is a schematic illustration of a machine tool according to another modification of the embodiment.

### Description of Embodiments

Hereinafter, a friction stir welding method, a production method of an automotive component, a machine tool 1, and a program according to embodiments will be described with reference to the drawings. It is to be noted that in the following description of embodiments, portions and members having the same functions are denoted by the same reference numerals, and repeated descriptions of the portions and members denoted by the same reference numerals will be omitted.

### (First Embodiment)

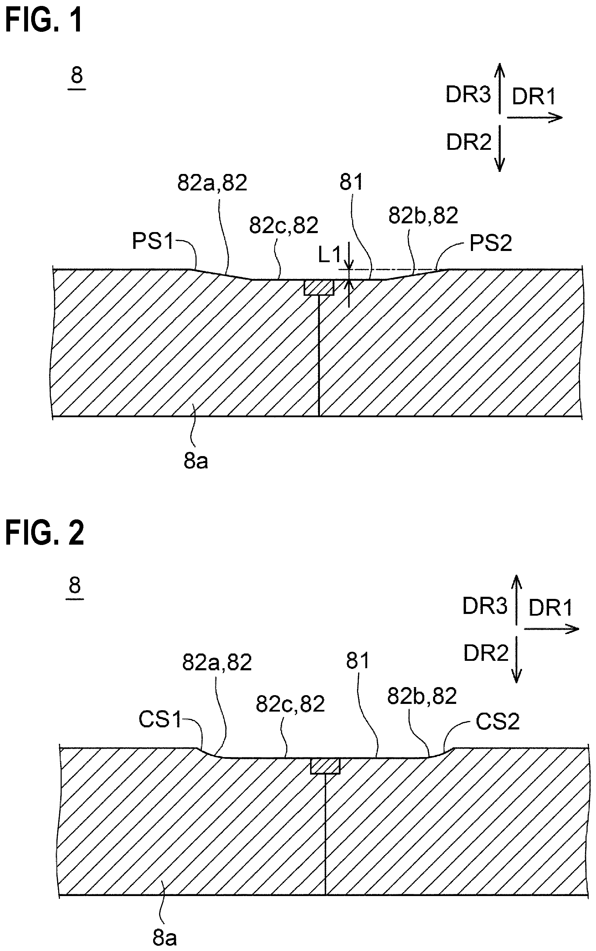

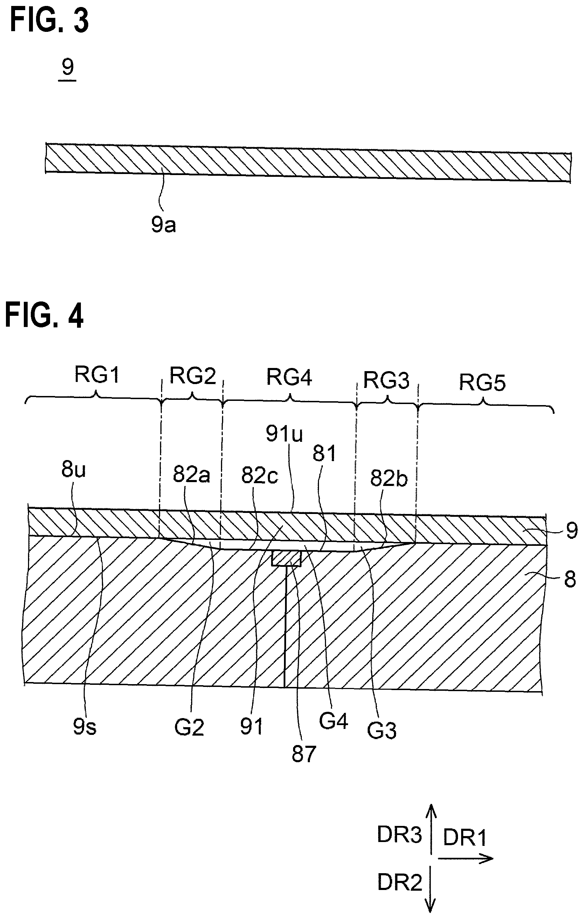

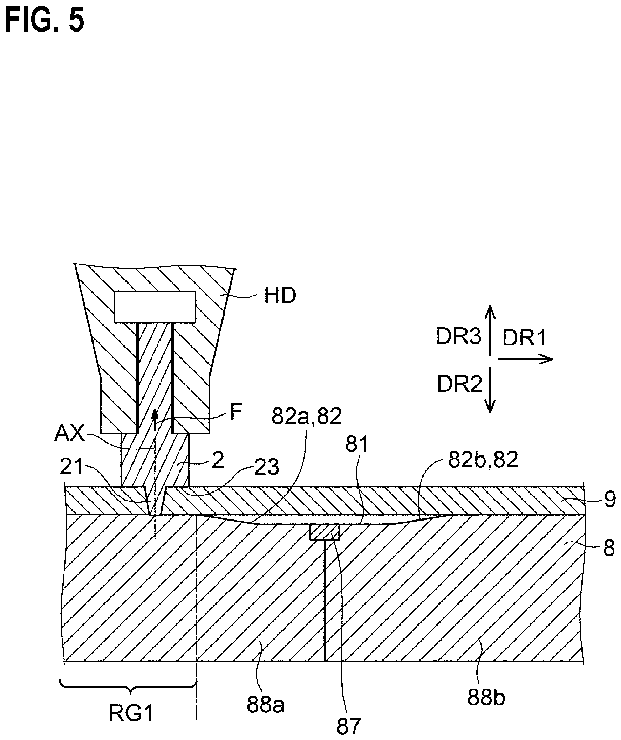

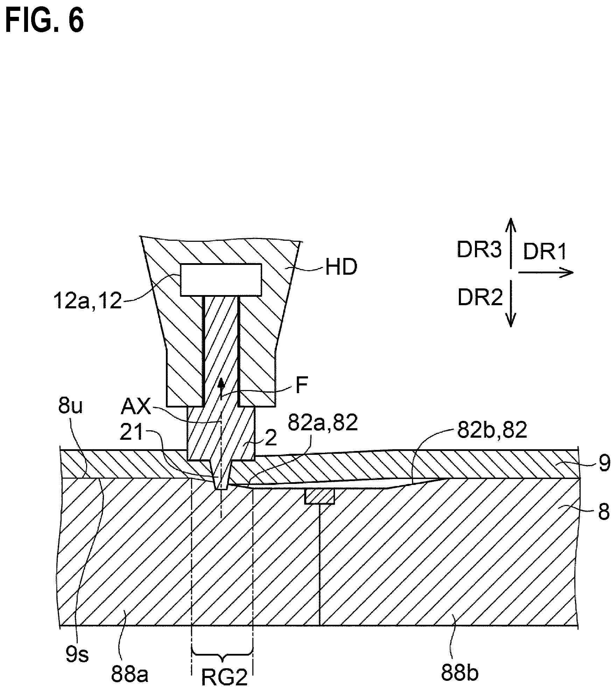

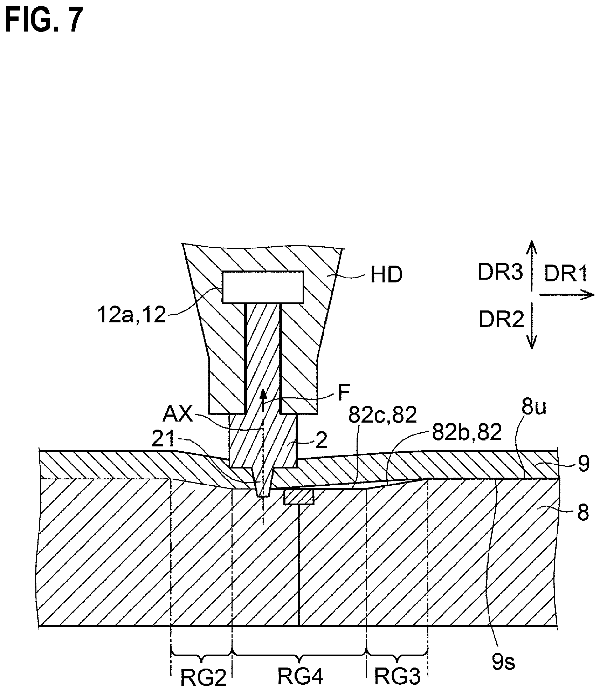

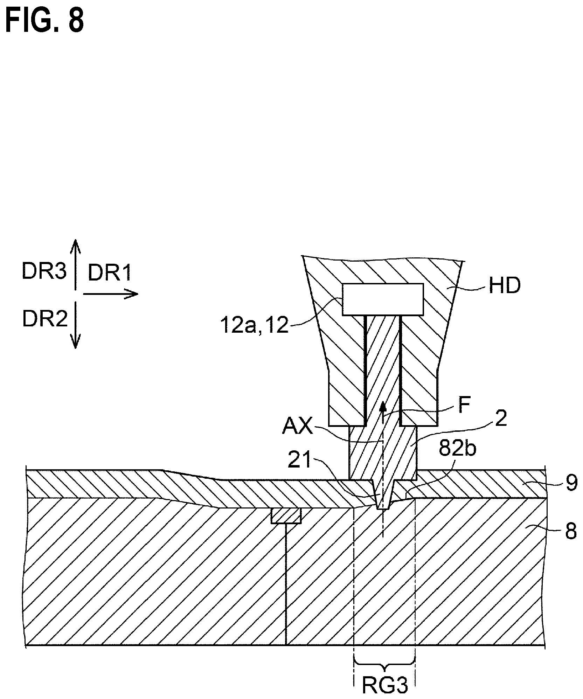

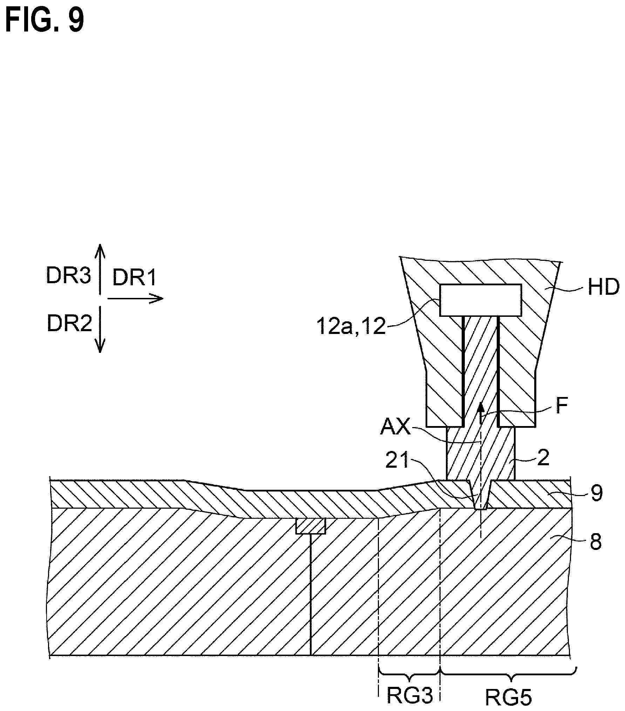

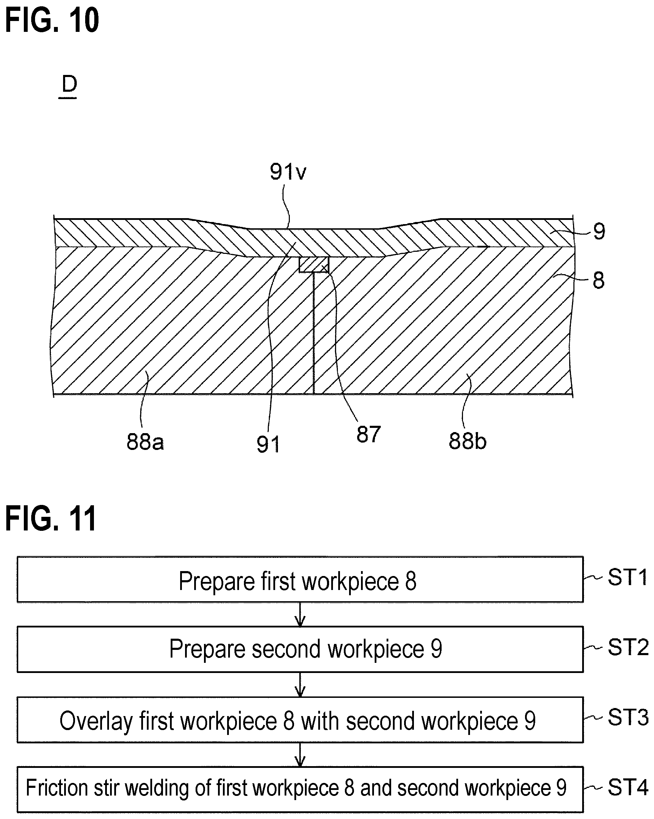

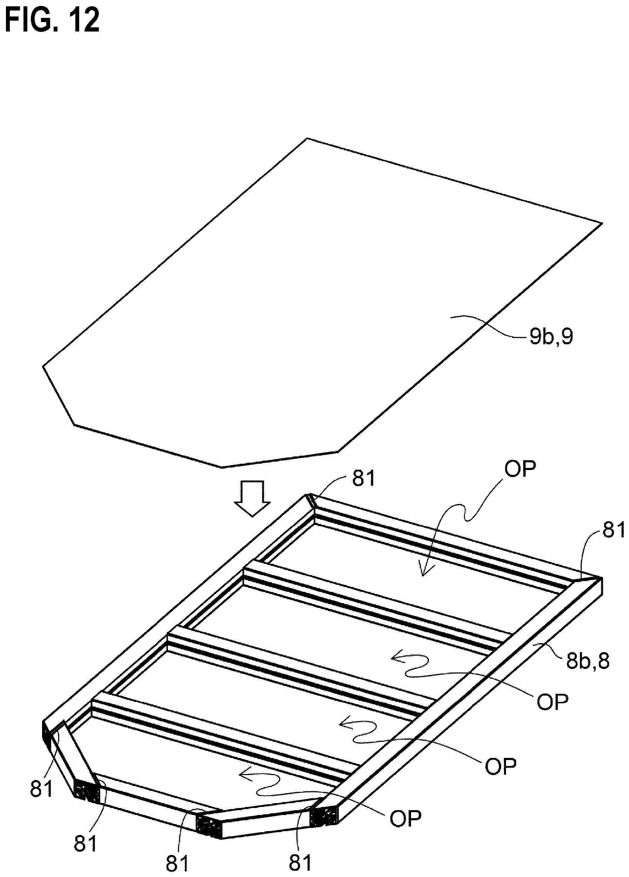

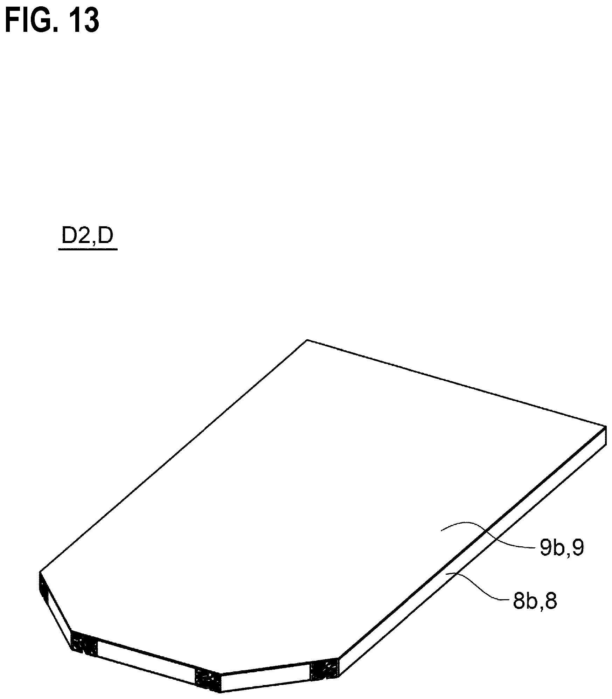

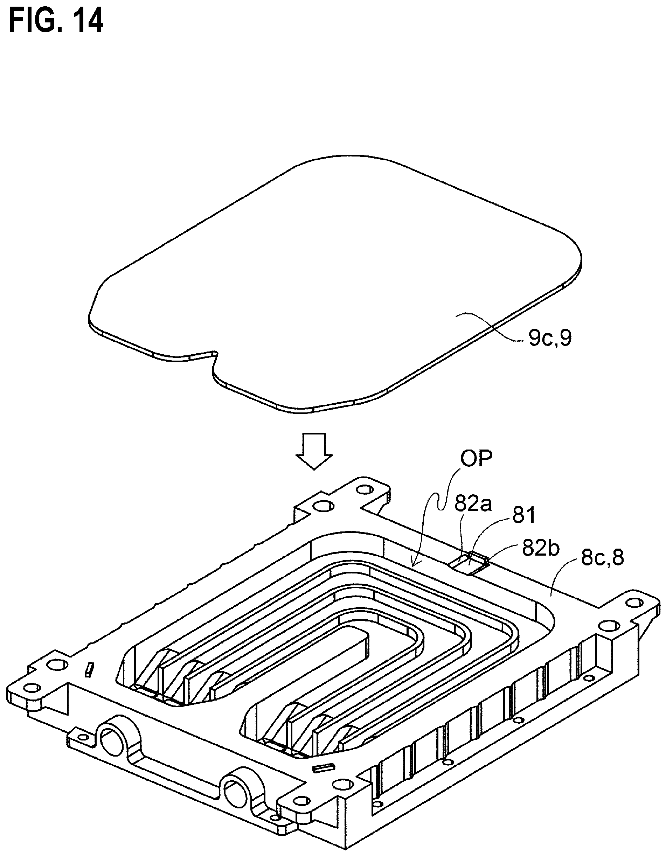

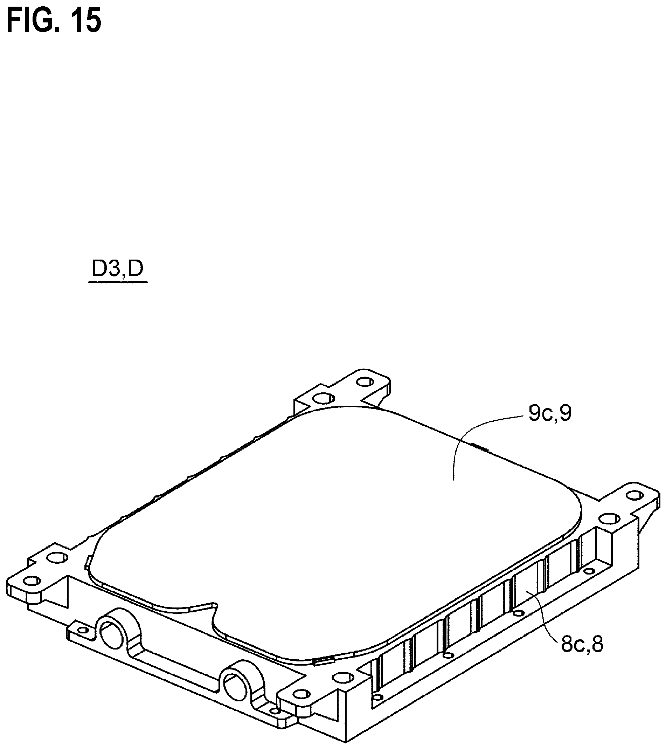

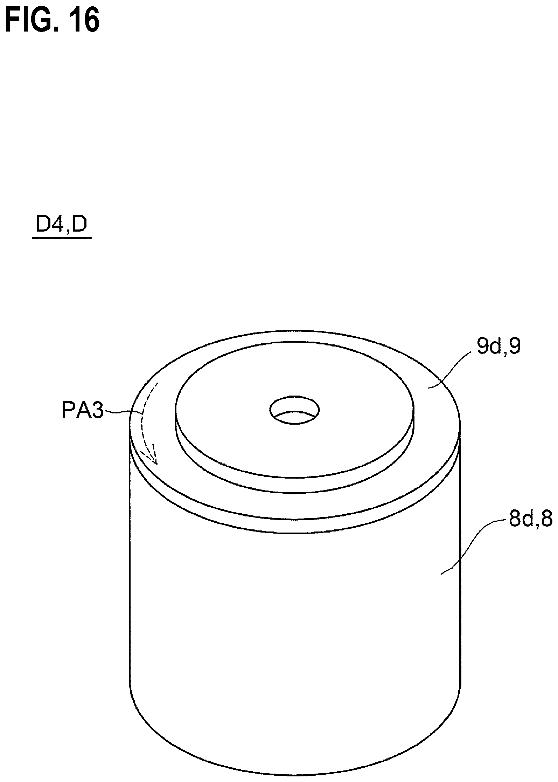

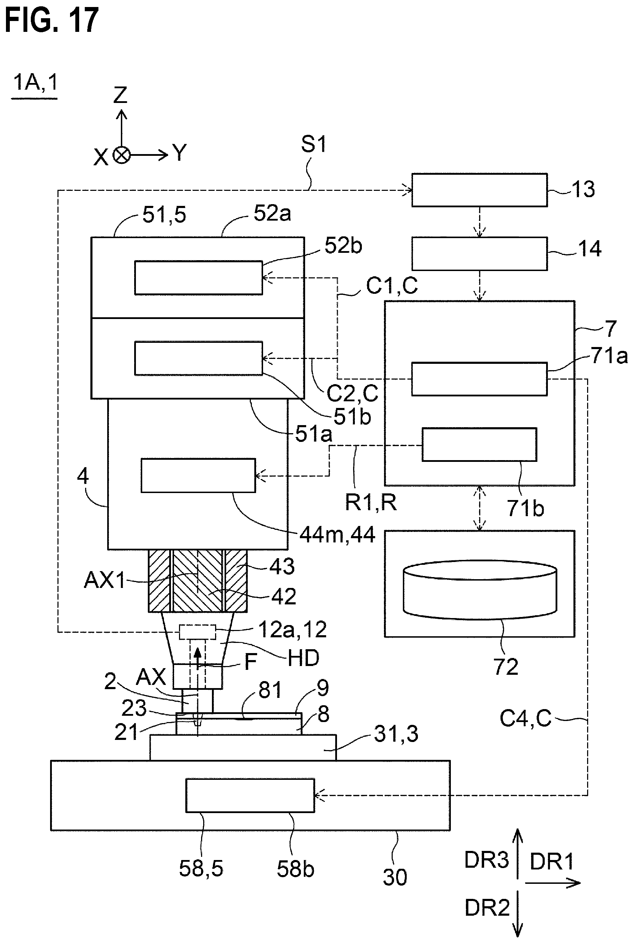

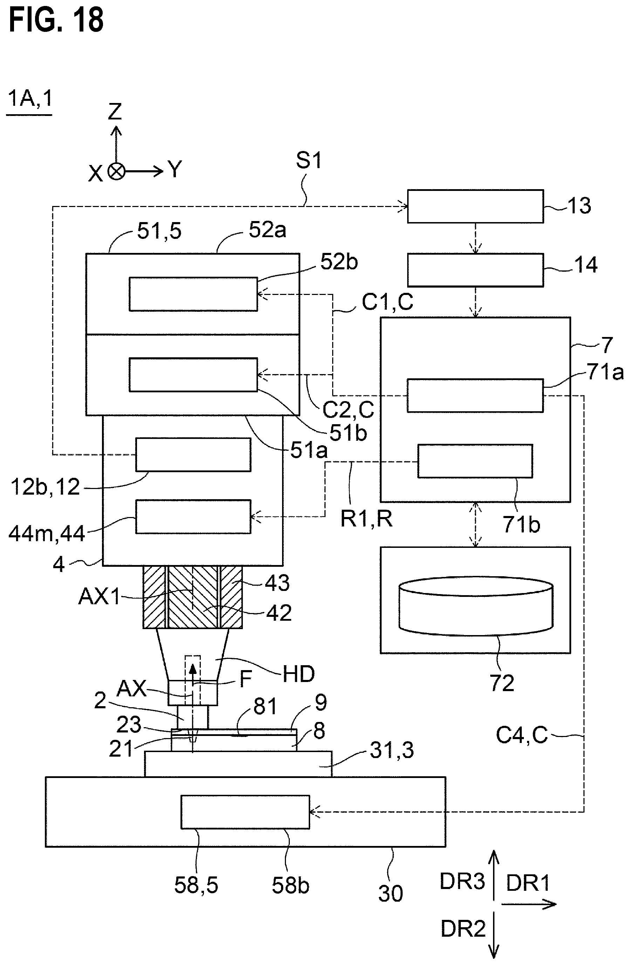

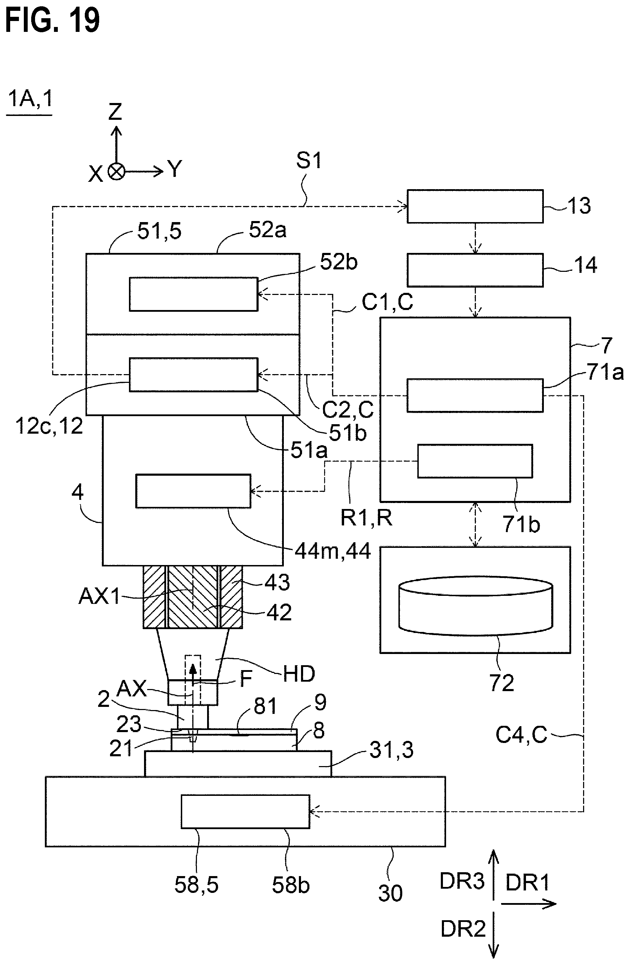

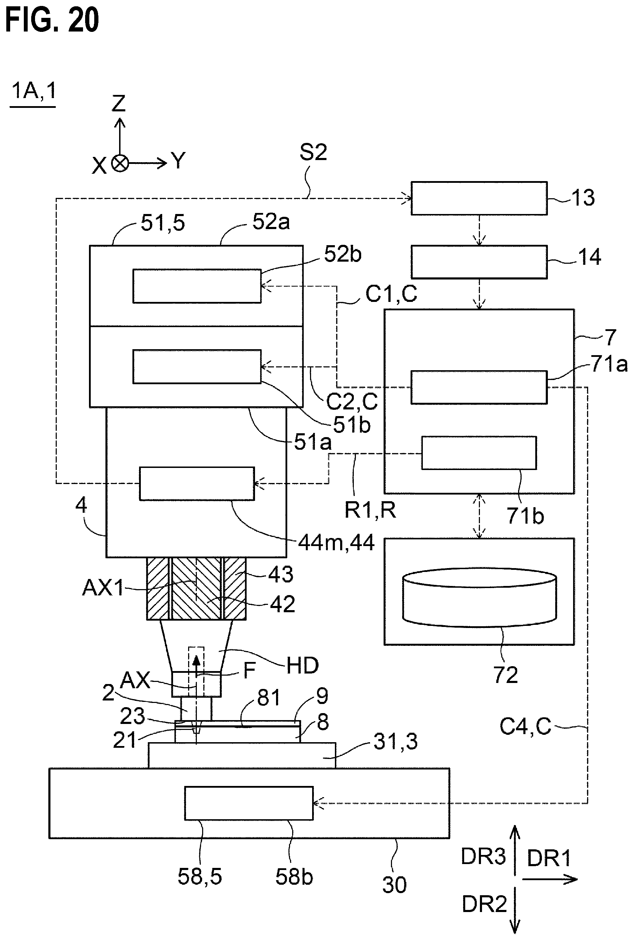

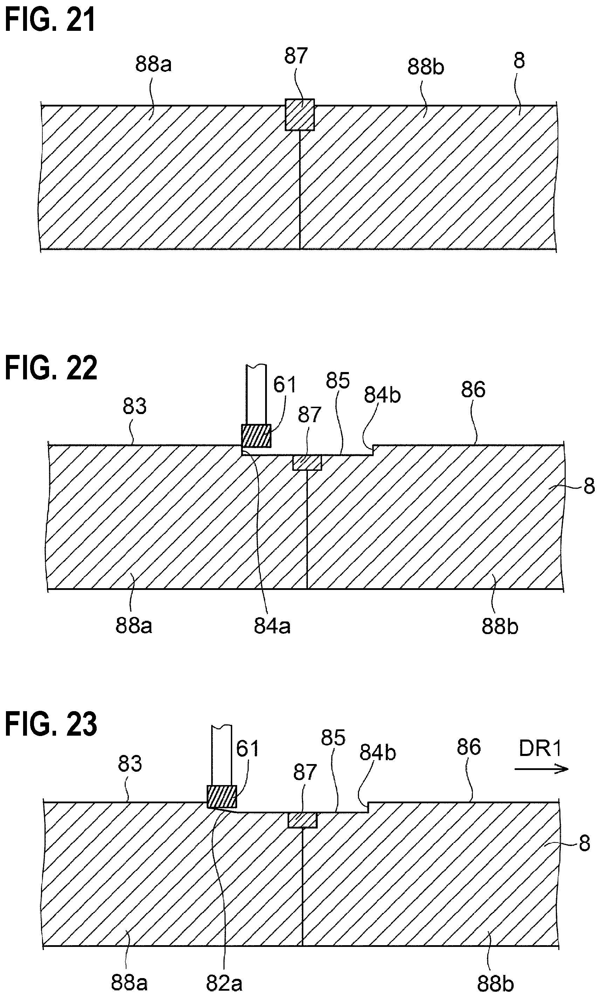

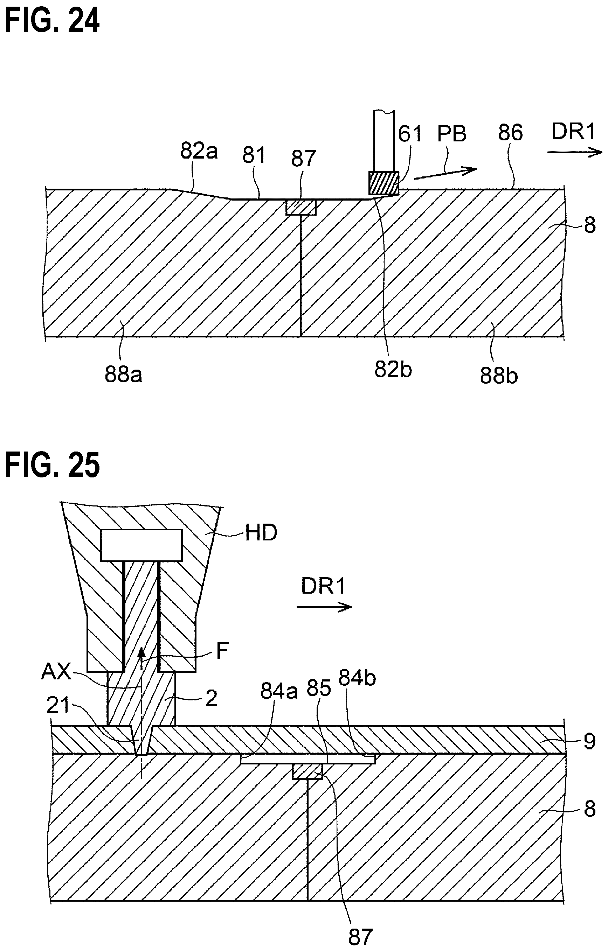

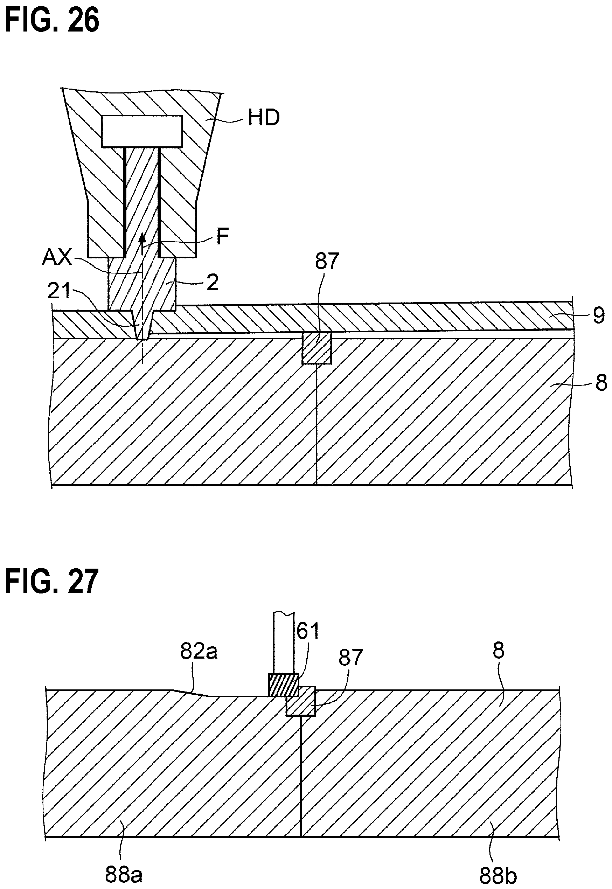

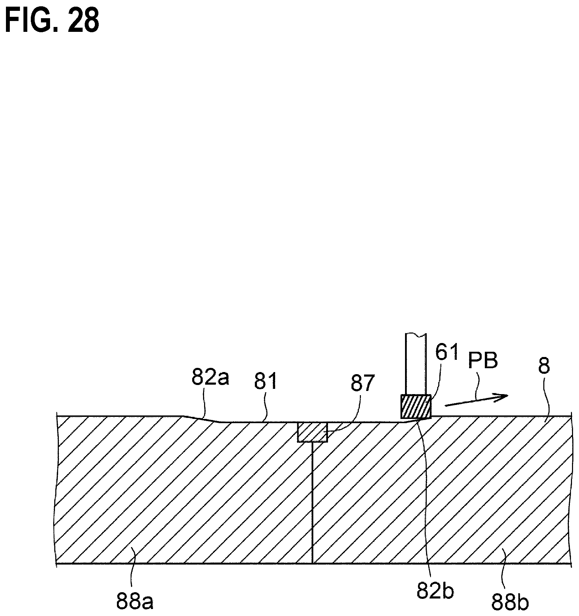

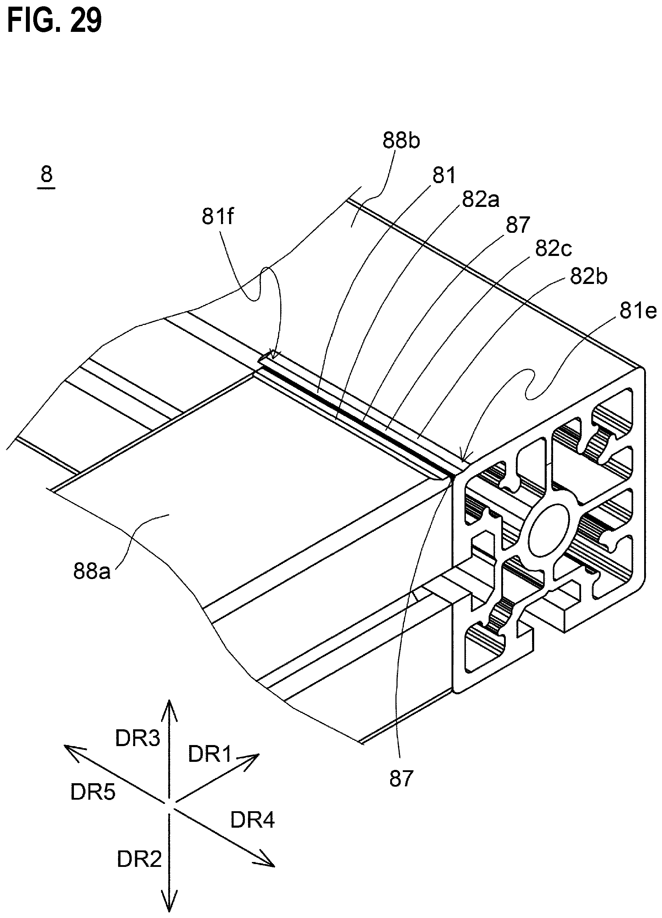

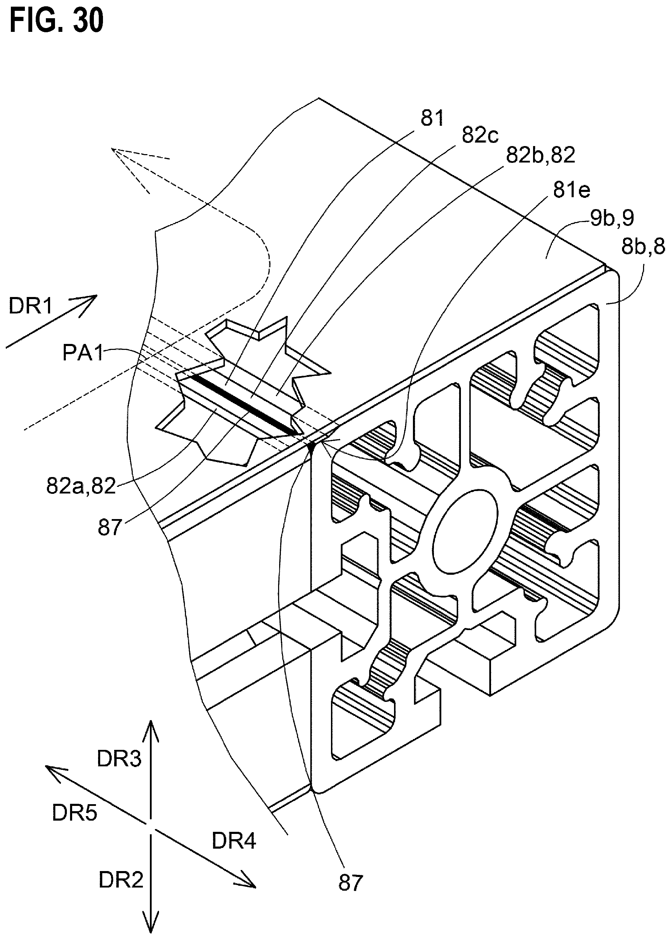

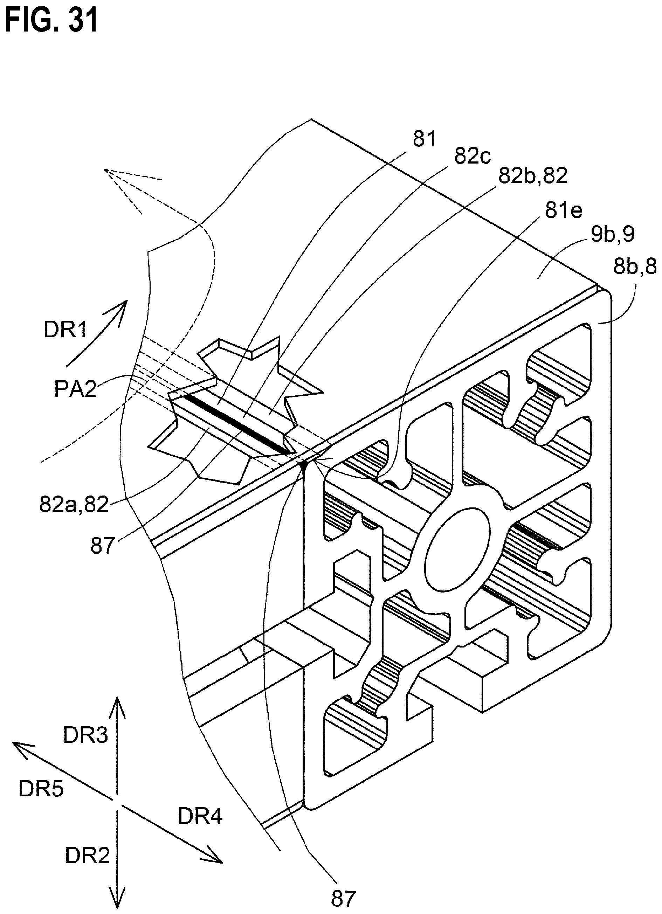

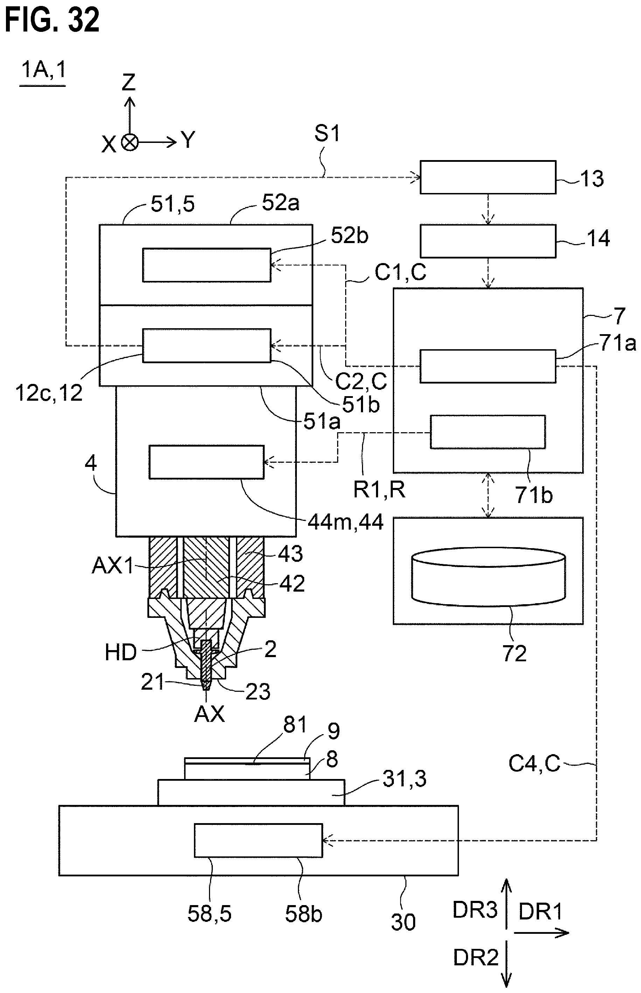

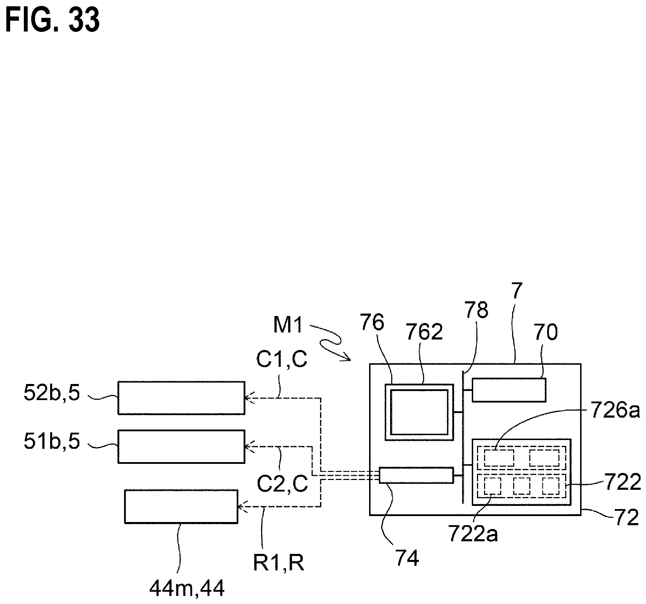

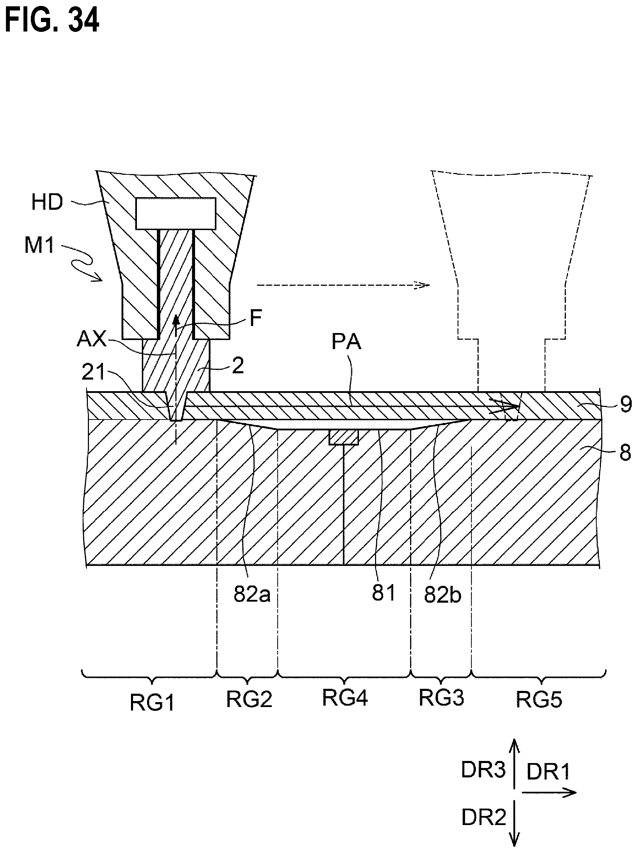

A friction stir welding method, a production method of an automotive component, a machine tool 1A, and a program according to the first embodiment will be described with reference to FIGs. 1 to 34. FIG. 1 is a schematic cross-sectional view of a first workpiece 8, schematically illustrating one example. FIG. 2 is a schematic cross-sectional view of the first workpiece 8, schematically illustrating another example. FIG. 3 is a schematic cross-sectional view of a second workpiece 9, schematically illustrating one example. FIG. 4 is a schematic cross-sectional view of a state in which the first workpiece 8 and the second workpiece 9 are overlaid with each other. FIG. 5 is a schematic cross-sectional view of a state in which a probe 21 is moving in a first direction DR1 traversing at least part of a first region RG1. FIG. 6 is a schematic cross-sectional view of a state in which the probe 21 is moving in the first direction DR1 traversing a second region RG2. FIG. 7 is a schematic cross-sectional view of a state in which the probe 21 is moving in the first direction DR1 traversing a fourth region RG4. FIG. 8 is a schematic cross-sectional view of a state in which the probe 21 is moving in the first direction DR1 traversing a third region RG3. FIG. 9 is a schematic cross-sectional view of a state in which the probe 21 is moving in the first direction DR1 traversing at least part of a fifth region RG5. FIG. 10 is a schematic cross-sectional view of a welded product D produced by friction stir welding, schematically illustrating one example. FIG. 11 is a flowchart of a friction stir welding method according to an embodiment. FIG. 12 is a schematic perspective view of a state in which a plate 9b is overlaid with a case body 8b. FIG. 13 is a schematic perspective view of an automotive component produced by friction stir welding, schematically illustrating one example. FIG. 14 is a schematic perspective view of a state in which the plate 9c is overlaid with the case body 8c. FIG. 15 is a schematic perspective view of the automotive component produced by the friction stir welding, schematically illustrating another example. FIG. 16 is a schematic perspective view of the automotive component produced by the friction stir welding, schematically illustrating further another example. FIG. 17 is a schematic illustration of a machine tool 1A according to the first embodiment. FIG. 18 is a schematic illustration of the machine tool 1A according to a first modification of the first embodiment. FIG. 19 is a schematic illustration of the machine tool 1A according to a second modification of the first embodiment. FIG. 20 is a schematic illustration of the machine tool 1A according to a third modification of the first embodiment. FIG. 21 is a schematic cross-sectional view of the first workpiece 8 including a welded portion 87, schematically illustrating one example. FIG. 22 is a schematic cross-sectional view of a state in which the welded portion 87 and a part around the welded portion 87 are cut to form a recess 85. FIG. 23 is a schematic illustration of a state in which a first stepped portion 84a is cut to form a first surface 82a having a height gradually decreasing in the first direction DR1. FIG. 24 is a schematic illustration of a state in which a second stepped portion 84b is cut to form a second surface 82b having a height gradually increasing in the first direction DR1. FIG. 25 is a schematic cross-sectional view of a friction stir welding method in a first comparative example. FIG. 26 is a schematic cross-sectional view of a friction stir welding method in a second comparative example. FIG. 27 is a schematic cross-sectional view of a state in which the welded portion 87 and a part around the welded portion 87 are cut to form the first surface 82a directly. FIG. 28 is a schematic cross-sectional view of a state in which the welded portion 87 and a part around the welded portion 87 are cut to form a recessed portion 81 including the first surface 82a and a second surface 82b directly. FIG. 29 is a schematic perspective view of a state in which the recessed portion 81 extends along a fourth direction DR4. FIG. 30 is a schematic perspective view of a state in which an end portion 81e on the fourth direction DR4 side of the recessed portion 81 is open with the first workpiece 8 overlaid with the second workpiece 9. FIG. 31 is a schematic perspective view of the probe 21 moving along a curved path PA2, schematically illustrating an example. It is to be noted that in FIGs. 30 and 31, the second workpiece 9 is partially cut out in order to facilitate the understanding of the state of the recessed portion 81, which is located below the second workpiece 9. FIG. 32 is a schematic illustration of the machine tool 1A according to a fourth modification of the first embodiment. FIG. 33 is a schematic illustration of a state in which devices to be controlled can be controlled by a controller 7. FIG. 34 is a schematic cross-sectional view of a first movement path PA that traverses the recessed portion 81.

As illustrated in FIG. 1, in a first step ST1, a first workpiece 8 is prepared. The first step ST1 is a first preparation process. The first workpiece 8 prepared in the first preparation process includes a recessed portion 81. The recessed portion 81 is defined by a plurality of surfaces 82, which includes a first surface 82a having a height gradually decreasing in a first direction DR1 and a second surface 82b having a height gradually increasing in the first direction DR1.

It is to be noted that herein, the "height" means a height based on the deepest position of the recessed portion 81. In other words, in a case where a depth direction of the recessed portion 81 is defined as a second direction DR2 and a direction opposite to the second direction DR2 is defined as a third direction DR3, the "height" herein means a distance in a direction along the third direction DR3 from the deepest position of the recessed portion 81. The "height" does not change depending on the attitude of the first workpiece 8.

In an example illustrated in FIG. 1, the first surface 82a is a flat inclined surface PS1. Alternatively, as illustrated in FIG. 2, the first surface 82a may be a curved inclined surface CS1 (for example, an arc-shaped inclined surface). In the example illustrated in FIG. 1, the second surface 82b is a flat inclined surface PS2. Alternatively, as illustrated in FIG. 2, the second surface 82b may be a curved inclined surface CS2 (for example, an arc-shaped inclined surface).

In the example illustrated in FIG. 1, a third surface 82c is disposed between the first surface 82a and the second surface 82b. Alternatively, the third surface 82c may be omitted. In a case where the third surface 82c is omitted, the first surface 82a and the second surface 82b each may be a flat inclined surface, or may be a curved inclined surface (for example, an arc-shaped inclined surface).

As illustrated in FIG. 3, in a second step ST2, a second workpiece 9 is prepared. The second step ST2 is a second preparation process.

As illustrated in FIG. 4, in a third step ST3, the first workpiece 8 and the second workpiece 9 are overlaid with each other. The third step ST3 is an overlaying process. In the overlaying process, the first workpiece 8 and the second workpiece 9 are overlaid with each other so as to form a first region RG1 in which the first workpiece 8 and the second workpiece 9 are in contact with each other, a second region RG2 in which a gap G2 between the first surface 82a and the second workpiece 9 gradually increases from zero in the first direction DR1, and a third region RG3 in which a gap G3 between the second surface 82b and the second workpiece 9 gradually decreases to zero in the first direction DR1.

Herein, "gradually increase" means continuously and gradually increasing. It is to be noted that herein, "gradually increase" includes a substantial gradual increase. In other words, a case where there are a few differences from a complete gradual increase due to the surface roughness of the first workpiece 8, the machining accuracy of the recessed portion 81, or any other reason is also regarded as "gradual increase."

Herein, "gradually decrease" means continuously and gradually decreasing. It is to be noted that herein, "gradual decrease" includes a substantial gradual decrease. In other words, a case where there are a few differences from a complete gradual decrease due to the surface roughness of the first workpiece 8, the machining accuracy of the recessed portion 81, or any other reason is also regarded as "gradual decrease."

In an example illustrated in FIG. 4, in a state in which the first workpiece 8 and the second workpiece 9 are overlaid with each other, the above-described first region RG1, the above-described second region RG2, a fourth region RG4, the above-described third region RG3, and a fifth region RG5 are formed sequentially in this order along the first direction DR1. In the fourth region RG4, the first workpiece 8 and the second workpiece 9 are spaced apart from each other, and in the fifth region RG5, the first workpiece 8 and the second workpiece 9 are in contact with each other. It is to be noted that in a case where the third surface 82c of the first workpiece 8 is omitted, the fourth region RG4 is also omitted.

In the example illustrated in FIG. 4, the second direction DR2 (in other words, the depth direction of the recessed portion 81) coincides with a direction from the second workpiece 9 toward the first workpiece 8. The third direction DR3 coincides with a direction from the first workpiece 8 toward the second workpiece 9.

As illustrated in FIGs. 5 to 9, in a fourth step ST4, friction stir welding for welding the first workpiece 8 and the second workpiece 9 together is performed. The fourth step ST4 is a welding process. The welding process is performed using a friction stir welding tool 2. By performing the welding process, a welded product D after the first workpiece 8 and the second workpiece 9 are welded together is produced (see FIG. 10).

As illustrated in FIG. 5, the welding process (the fourth step ST4) includes moving the friction stir welding tool 2 in the first direction DR1 so that a probe 21 of the friction stir welding tool 2 traverses at least part of the above-described first region RG1. By such a movement, the friction stir welding for welding the first workpiece 8 and the second workpiece 9 together is performed in a portion, through which the probe 21 passes, in the above-described first region RG1.

As illustrated in FIG. 6, the welding process (the fourth step ST4) includes gradually moving the friction stir welding tool 2 in the second direction DR2 so as to follow a change in the height of the first surface 82a, while moving the friction stir welding tool 2 in the first direction DR1 so that the probe 21 traverses the above-described second region RG2. By such movements, the friction stir welding for welding the first workpiece 8 and the second workpiece 9 together is performed in a portion, through which the probe 21 passes, in the second region RG2.

In an example illustrated in FIG. 7, the welding process (the fourth step ST4) includes moving the friction stir welding tool 2 in the first direction DR1 so that the probe 21 traverses the above-described fourth region RG4. By such a movement, the friction stir welding for welding the first workpiece 8 and the second workpiece 9 together is performed in a portion, through which the probe 21 passes, in the fourth region RG4. It is to be noted that in a case where the third surface 82c of the first workpiece 8 is omitted, the process of traversing, by the probe 21, the fourth region RG4 is also omitted.

As illustrated in FIG. 8, the welding process (the fourth step ST4) includes gradually moving the friction stir welding tool 2 in the third direction DR3 so as to follow a change in the height of the second surface 82b, while moving the friction stir welding tool 2 in the first direction DR1 so that the probe 21 traverses the above-described third region RG3. By such movements, the friction stir welding for welding the first workpiece 8 and the second workpiece 9 together is performed in a portion, through which the probe 21 passes, in the third region RG3.

As illustrated in FIG. 9, the welding process (the fourth step ST4) includes moving the friction stir welding tool 2 in the first direction DR1 so that the probe 21 of the friction stir welding tool 2 traverses at least part of the above-described fifth region RG5. By such movement, the friction stir welding for welding the first workpiece 8 and the second workpiece 9 together is performed in a portion, through which the probe 21 passes, in the above-described fifth region RG5.

In examples illustrated in FIGs. 5 to 9, the probe 21, which is rotating about a rotation axis AX, traverses the first region RG1, the second region RG2, the fourth region RG4, the third region RG3, and the fifth region RG5 sequentially in this order, and thus the friction stir welding for welding the first workpiece 8 and the second workpiece 9 together is performed. In this manner, the welded product D after the first workpiece 8 and the second workpiece 9 are welded together is produced (see FIG. 10).

In the examples illustrated in FIGs. 6 and 8, when the probe 21 moves in the first direction DR1 traversing each the second region RG2 and the third region RG3, the position of the friction stir welding tool 2 is controlled so that a fluctuation in axial load F (in other words, a load in a direction along the rotation axis AX of the probe 21) received by the friction stir welding tool 2 from the first workpiece 8 and the second workpiece 9 is reduced.

In the friction stir welding method according to the first embodiment, the first surface 82a is a surface having a height gradually decreasing in the first direction DR1. The second surface 82b is a surface having a height gradually increasing in the first direction DR1. Thus, a defect (more specifically, a void) hardly occurs in a welded portion between the first workpiece 8 and the second workpiece 9, as compared with a case where the first surface 82a and the second surface 82b are each a distinct stepped surface.

The friction stir welding method according to the first embodiment includes moving the friction stir welding tool 2 so as to follow a change in height of each the first surface 82a and the second surface 82b, while moving the friction stir welding tool 2 in the first direction DR1. Thus, a defect (more specifically, a void) hardly occurs in the welded portion between the first workpiece 8 and the second workpiece 9, as compared with a case where the friction stir welding tool 2 is not made to follow the change in height of each the first surface 82a and the second surface 82b (for example, as compared with a case where the friction stir welding tool 2 is moved completely horizontally).

In the friction stir welding method according to the first embodiment, when the probe 21 moves in the first direction DR1 traversing each the second region RG2 and the third region RG3, the position of the friction stir welding tool 2 is controlled so that a fluctuation in the axial load received by the friction stir welding tool 2 from the first workpiece 8 and the second workpiece 9 is reduced. Therefore, the probe 21, which moves in the second direction DR2 or the third direction DR3, while moving in the first direction DR1, is prevented from being pressed against the first workpiece 8 and the second workpiece 9 with excessively small force or excessively large force. In this manner, an occurrence of a void due to the excessively small pressing force or an occurrence of a large burr due to the excessively large pressing force is reduced.

### (Optional and Additional Configurations)

Next, with reference to FIGs. 1 to 34, the friction stir welding method, the production method of the automotive component, and optional and additional configurations that are adoptable in the machine tool 1A according to the first embodiment will be described.

### (Second Direction DR2 and Third Direction DR3)

In the examples illustrated in FIGs. 5 to 9, in the welding process (the fourth step ST4), the second direction DR2 (in other words, the depth direction of the recessed portion 81) coincides with a downward direction (more specifically, a vertically downward direction). In addition, the third direction DR3 coincides with an upward direction (more specifically, a vertically upward direction).

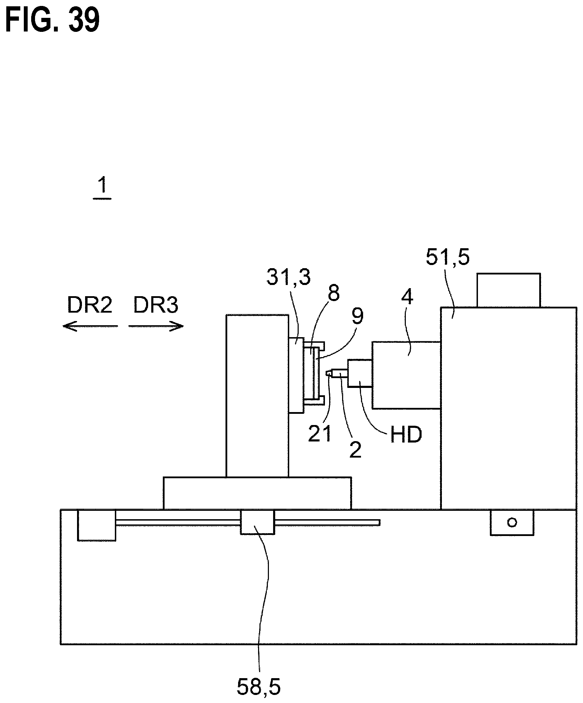

Alternatively, as illustrated in FIG. 39, the second direction DR2 and the third direction DR3 each may be a direction parallel to a horizontal plane. Furthermore, alternatively, the second direction DR2 and the third direction DR3 may be directions each being inclined with respect to a vertical plane and the horizontal plane.

### (First Workpiece 8 and Second Workpiece 9)

In the examples illustrated in FIGs. 1 and 2, the first workpiece 8 is a block 8a. In the example illustrated in FIG. 3, the second workpiece 9 is a plate 9a. The plate 9a may have a thickness of, for example, equal to or smaller than 10 mm, or equal to or smaller than 5 mm. It is to be noted that the first workpiece 8 and the second workpiece 9 each may have any shape as long as the friction stir welding tool 2 is capable of performing overlay welding. In other words, the first workpiece 8 is not limited to the block 8a, and the second workpiece 9 is not limited to the plate 9a. For example, the first workpiece 8 may be a case body or a frame.

As illustrated in FIG. 4, after the overlaying process (the third step ST3) and before the welding process (the fourth step ST4), in a state in which the first workpiece 8 and the second workpiece 9 are overlaid with each other, a portion 91 of the second workpiece 9 faces the recessed portion 81 of the first workpiece 8, and an upper surface of the portion 91 may be a flat surface 91u. In addition, as illustrated in FIGs. 5 to 10, a process of performing the friction stir welding for welding the first workpiece 8 and the second workpiece 9 together may include forming the flat surface 91u into a recessed surface 91v (see FIG. 10).

In the examples illustrated in FIGs. 5 to 10, the friction stir welding is performed for welding an upper surface 8u of the first workpiece 8 and a lower surface 9s of the second workpiece 9 together. The friction stir welding is performed for welding the upper surface 8u of the first workpiece 8 and a lower surface of an outer edge portion of the second workpiece 9 together.

The welded product D is produced by performing the friction stir welding for welding the first workpiece 8 and the second workpiece 9 together. Therefore, the term "friction stir welding method" herein can be read as "a production method of a welded product."

### (Production Method of Automotive Component)

The product produced by performing the friction stir welding for welding the first workpiece 8 and the second workpiece 9 together may be an automotive component (for example, an electric automotive component). In this case, the terms "friction stir welding method", "first workpiece", and "second workpiece" herein are respectively read as "production method of automotive component", "first component", and "second component".

As illustrated in FIG. 12, the first workpiece 8 may be a case body 8b, which accommodates batteries (more specifically, a frame body that accommodates batteries). In addition, the second workpiece 9 may be a plate 9b (for example, a bottom plate or a top plate), which covers openings OP of the case body 8b. The welded product D, which is produced by performing the above-described first step ST1 to fourth step ST4, may be a battery case D2 (see FIG. 13) after the case body 8b and the plate 9b are welded together. The battery accommodated in the battery case D2 may be a lithium-ion battery or any other type of battery. In addition, the battery case D2 may be a case in which the battery has already been accommodated, or may be a case in which the battery has not yet been accommodated.

Alternatively, as illustrated in FIG. 14, the first workpiece 8 may be a case body 8c, which accommodates an inverter (in other words, a DC/AC converter). In addition, the second workpiece 9 may be a plate 9c, which covers the openings OP of the case body 8c. The welded product D, which is produced by performing the above-described first step ST1 to fourth step ST4, may be an inverter case D3 (see FIG. 15) in which the case body 8c and the plate 9c are welded together. Further, the invertor case D3 may be a case in which the invertor has already been accommodated, or may be a case in which the invertor has not yet been accommodated.

Furthermore, alternatively, as illustrated in FIG. 16, the first workpiece 8 may be a case body 8d, which accommodates a motor. In addition, the second workpiece 9 may be a plate 9d (for example, an end plate), which covers an opening of the case body 8d. Further, the welded product D, which is produced by performing the above-described first step ST1 to fourth step ST4, may be a motor case D4 after the case body 8d and the plate 9d are welded together. It is to be noted that the invertor case D3 (or the motor case D4) may be a case that accommodates both the invertor and the motor.

### (Control of Position of Friction Stir Welding Tool 2)

In the examples illustrated in FIGs. 6 and 8, when the probe 21 moves in the first direction DR1 traversing each the second region RG2 and the third region RG3, the position of the friction stir welding tool 2 (more specifically, the position of the friction stir welding tool 2 in the direction along the rotation axis AX of the probe 21) is controlled to reduce a fluctuation in the axial load F received by the friction stir welding tool 2 from the first workpiece 8 and the second workpiece 9.

In the examples illustrated in FIGs. 6 and 8, when the probe 21 moves in the first direction DR1 traversing each the second region RG2 and the third region RG3, the position of the friction stir welding tool 2 (more specifically, the position of the friction stir welding tool 2 in the direction along the rotation axis AX of the probe 21) may be controlled to keep constant the axial load F received by the friction stir welding tool 2 from the first workpiece 8 and the second workpiece 9.

It is to be noted that herein, one aspect of keeping the axial load F constant includes keeping the axial load F at a predetermined value. In this case, when the axial load F is below the predetermined value, the position of the friction stir welding tool 2 is compensated in the second direction DR2 in order to keep the axial load F at the predetermined value. When the axial load F exceeds the predetermined value, the position of the friction stir welding tool 2 is compensated in the third direction DR3 in order to keep the axial load F at the predetermined value.

In addition, herein, one aspect of keeping the axial load F constant includes keeping the axial load F within a predetermined range. In this case, when the axial load F is below a lower limit value of the predetermined range, the position of the friction stir welding tool 2 is compensated in the second direction DR2 in order to keep the axial load F within the predetermined range. When the axial load F exceeds an upper limit value of the predetermined range, the position of the friction stir welding tool 2 is compensated in the third direction DR3 in order to keep the axial load F within the predetermined range.

The above-described control (or the above-described position compensation) may be conducted by a controller compensating the position of the friction stir welding tool 2, based on signal data from a sensor that directly or indirectly measures the axial load F.

Alternatively, in a case where the axial load F is a specific control command value or a function of a specific physical quantity, the above-described control (or the above-described position compensation) may be conducted by the controller compensating the position of the friction stir welding tool 2, based on the specific control command value or the specific physical quantity. For example, the axial load F is a function of a load applied to a motor that drives the rotation of the probe 21 about the rotation axis AX. Thus, the above-described control (or the position compensation) may be conducted by the controller compensating the position of the friction stir welding tool 2, based on the load applied to the motor that drives the rotation of the probe 21 about the rotation axis AX. It is to be noted that the load applied to the motor that drives the rotation of the probe 21 about the rotation axis AX may be calculated or determined, based on, for example, a drive current command value of the motor or a drive current value of the motor.

It is to be noted that the maximum value (in other words, a compensation limit value) of the compensation amount when the position of the friction stir welding tool 2 is compensated in the second direction DR2 in accordance with the axial load F received by the friction stir welding tool 2 from the first workpiece 8 and the second workpiece 9 may be, for example, equal to or smaller than 5 mm, equal to or smaller than 3 mm, or equal to or smaller than 2 mm. In other words, even when the position of the friction stir welding tool 2 is compensated in the second direction DR2 in accordance with the axial load F, the position of the friction stir welding tool 2 may be configured not to be compensated in the second direction DR2 exceeding 5 mm.

The position of the friction stir welding tool 2 is not compensated in the second direction DR2 exceeding 5 mm. Thus, in a case where a defect is present on the recessed portion 81 in its shape, for example, a malfunction of the machine tool 1 is prevented. In this case, even though the depth of the recessed portion 81 exceeds 5 mm, the position of the friction stir welding tool 2 is not compensated in the second direction DR2 exceeding 5 mm. It is to be noted that according to an embodiment, the maximum value of the compensation amount (in other words, the compensation limit value) is not limited to a value equal to or smaller than 5 mm. Also, according to an embodiment, the compensation limit value may not necessarily be set.

It is to be noted that a depth L1 (see FIG. 1) of the recessed portion 81 of the first workpiece 8 is, for example, equal to or larger than 0. 1 mm and equal to or smaller than 3 mm.

### (First Example of Control of Position of Friction Stir Welding Tool 2)

A first example of control of the position of the friction stir welding tool 2 will be described. In an example illustrated in FIG. 17, the machine tool 1A includes a sensor 12 and a controller 7. The sensor 12 detects an axial load F received by the friction stir welding tool 2 from the first workpiece 8 and the second workpiece 9. The controller 7 receives signal data S1 indicating the axial load F from the sensor 12, and compensates the position of the friction stir welding tool 2 in the direction along the rotation axis AX of the probe 21, based on the signal data S1. It is to be noted that the signal data S1 may be raw signal data, or may be data obtained by processing the raw signal data.

In the example illustrated in FIG. 6, when the probe 21 moves in the first direction DR1 traversing the second region RG2, the axial load F detected by the sensor 12 decreases. The controller 7 compensates the position of the friction stir welding tool 2 in the direction along the rotation axis AX of the probe 21 to the second direction DR2 in accordance with a decrease in the axial load F when the probe 21 traverses the second region RG2. In this manner, the fluctuation in the axial load F received by the friction stir welding tool 2 from the first workpiece 8 and the second workpiece 9 is reduced.

In the example illustrated in FIG. 8, when the probe 21 moves in the first direction DR1 traversing the third region RG3, the axial load F detected by the sensor 12 increases. The controller 7 compensates the position of the friction stir welding tool 2 in the direction along the rotation axis AX of the probe 21 to the third direction DR3 in accordance with an increase in the axial load F when the probe 21 traverses the third region RG3. In this manner, the fluctuation in the axial load F received by the friction stir welding tool 2 from the first workpiece 8 and the second workpiece 9 is reduced.

In the examples illustrated in FIGs. 6 and 17, when the probe 21 moves in the first direction DR1 traversing the second region RG2, the controller 7 may compensate the position of the friction stir welding tool 2 in the direction along the rotation axis AX of the probe 21 to the second direction DR2, based on the signal data S1 received from the sensor 12, so as to keep constant the axial load F received by the friction stir welding tool 2 from the first workpiece 8 and the second workpiece 9.

In the examples illustrated in FIGs. 8 and 17, when the probe 21 moves in the first direction DR1 traversing the third region RG3, the controller 7 may compensate the position of the friction stir welding tool 2 in the direction along the rotation axis AX of the probe 21 to the third direction DR3, based on the signal data S1 received from the sensor 12, so as to keep constant the axial load F received by the friction stir welding tool 2 from the first workpiece 8 and the second workpiece 9.

In the examples illustrated in FIGs. 5, 7, 9, and 17, when the probe 21 moves in the first direction DR1 traversing each the first region RG1, the fourth region RG4, and the fifth region RG5, the controller 7 may compensate the position of the friction stir welding tool 2 in the direction along the rotation axis AX of the probe 21, based on the signal data S1 received from the sensor 12, so as to reduce the fluctuation in the above-described axial load F (more specifically, to keep the above-described axial load F constant).

In an example illustrated in FIG. 17, a sensor 12a, which detects the axial load F received by the friction stir welding tool 2 from the first workpiece 8 and the second workpiece 9, is disposed in a probe holder HD, which holds the probe 21 of the friction stir welding tool 2.

Alternatively, as illustrated in FIG. 18, a sensor 12b, which detects the axial load F received by the friction stir welding tool 2 from the first workpiece 8 and the second workpiece 9, may be disposed on a rotation body 42 (in other words, a tool spindle) to which the probe holder HD is attached.

Furthermore, alternatively, a detector that detects a load acting on a driving system may be used as the above-described sensor 12. In an example illustrated in FIG. 19, the machine tool 1A includes a mover 5 (for example, a first drive 51b, which moves a machining head 4 in a direction parallel to the vertical direction), which moves a machining head 4 including the above-described rotation body 42 (in other words, the spindle). In addition, the machine tool 1A is capable of detecting a load acting on the mover 5 (for example, the first drive 51b, which moves the machining head 4 in the direction parallel to the vertical direction). In this case, a detector that detects the load acting on the mover 5 (for example, the first drive 51b) may be used as a sensor 12c, which detects the above-described axial load F.

### (Second Example of Control of Position of Friction Stir Welding Tool 2)

In an example illustrated in FIG. 20, the machine tool 1A includes a motor 44m, which drives the rotation of the probe 21 about the rotation axis AX. In the example illustrated in FIG. 20, the friction stir welding method (more specifically, the above-described fourth step ST4) includes the controller 7 acquiring a load applied to the motor 44m, which drives the rotation of the probe 21 about the rotation axis AX.

The load applied to the motor 44m may be acquired by acquiring data indicating a drive current command value of the motor 44m or data S2 indicating a drive current value of the motor 44m. For example, when the motor 44m rotates the probe 21 about the rotation axis AX at a certain rotational speed, the controller 7 is capable of calculating or determining the load of the motor 44m, based on data indicating the drive current command value of the motor 44m (it is to be noted that in a case where the motor is an AC induction motor, the drive current command value is, for example, a q-axis current command value) or the date S2 indicating the drive current value of the motor 44m. The drive current command value itself of the motor 44m or the drive current value itself of the motor 44m may be used as the load of the motor 44m. Alternatively, a time average of the drive current command value of the motor 44m, a time average of the drive current of the motor 44m, and a standardized value of the drive current command value of the motor 44m (in other words a value represented by a ratio to a reference value), or a standardized value of the drive current of the motor 44m (in other words, a value represented by a ratio to the reference value) may be used as the load of the motor 44m.

In the examples illustrated in FIGs. 6 and 20, the controller 7 compensates the position of the friction stir welding tool 2 in the direction along the rotation axis AX of the probe 21 to the second direction DR2 in accordance with a decrease in the load of the motor 44m, when the probe 21 traverses the second region RG2. In this manner, the fluctuation in the axial load F received by the friction stir welding tool 2 from the first workpiece 8 and the second workpiece 9 is reduced.

In the examples illustrated in FIGs. 8 and 20, the controller 7 compensates the position of the friction stir welding tool 2 in the direction along the rotation axis AX of the probe 21 to the third direction DR3 in accordance with an increase in the load of the motor 44m, when the probe 21 traverses the third region RG3. In this manner, the fluctuation in the axial load F received by the friction stir welding tool 2 from the first workpiece 8 and the second workpiece 9 is reduced.

In the examples illustrated in FIGs. 6 and 20, when the probe 21 moves in the first direction DR1 traversing the second region RG2, the controller 7 may compensate the position of the friction stir welding tool 2 in the direction along the rotation axis AX of the probe 21 to the second direction DR2 to keep constant the drive current command value of the motor 44m or the drive current value of the motor 44m acquired by the controller 7. By keeping constant the drive current command value of the motor 44m or the drive current value of the motor 44m, the axial load F received by the friction stir welding tool 2 from the first workpiece 8 and the second workpiece 9 is kept constant.

In the examples illustrated in FIGs. 8 and 20, when the probe 21 moves in the first direction DR1 traversing the third region RG3, the controller 7 may compensate the position of the friction stir welding tool 2 in the direction along the rotation axis AX of the probe 21 to the third direction DR3 so as to keep constant the drive current command value of the motor 44m or the drive current value of the motor 44m to be acquired by the controller 7. Since the drive current command value of the motor 44m or the drive current value of the motor 44m is kept constant, the axial load F received by the friction stir welding tool 2 from the first workpiece 8 and the second workpiece 9 is kept constant.

In the examples illustrated in FIGs. 5, 7, 9, and 20, when the probe 21 moves in the first direction DR1 traversing each the first region RG1, the fourth region RG4, and the fifth region RG5, the controller 7 may compensate the position of the friction stir welding tool 2 in the direction along the rotation axis AX of the probe 21 so as to keep constant the drive current command value of the motor 44m or the drive current value of the motor 44m to be acquired by the controller 7.

### (Third Surface 82c)

In the example illustrated in FIG. 4, the plurality of surfaces 82, which define the recessed portion 81 of the first workpiece 8, include the first surface 82a and the second surface 82b, and also includes the third surface 82c, which is disposed between the first surface 82a and the second surface 82b. In the example illustrated in FIG. 1, the third surface 82c is a surface having a constant height. It is to be noted that herein, the height being "constant" includes the height being substantially constant. In other words, also in a case where there are a few fluctuations in height due to the surface roughness of the first workpiece 8, the machining accuracy of the recessed portion 81, or any other reason, the height is considered to be "constant".

In the example illustrated in FIG. 4, the overlaying process (the third step ST3) includes forming the fourth region RG4, which is disposed between the second region RG2 and the third region RG3. In the example illustrated in FIG. 4, in the fourth region RG4, a gap G4 between the third surface 82c and the second workpiece 9 is substantially constant along the first direction DR1.

In the examples illustrated in FIGs. 6 to 8, the welding process (the fourth step ST4) includes moving the probe 21 so that the probe 21 traverses the second region RG2, the fourth region RG4, and the third region RG3 sequentially in this order.

In the examples illustrated in FIGs. 6 to 8, when the probe 21 moves in the first direction DR1 traversing each the second region RG2, the fourth region RG4, and the third regions RG3, the position of the friction stir welding tool 2 is controlled to reduce a change in the axial load F received by the friction stir welding tool 2 from the first workpiece 8 and the second workpiece 9. It is to be noted that in a case where the height of the third surface 82c is constant along the first direction DR1, when the probe 21 moves in the first direction DR1 traversing the fourth region RG4, the position of the friction stir welding tool 2 in the direction along the rotation axis AX of the probe 21 is kept substantially constant.

### (Process of Preparing First Workpiece 8)

In an example illustrated in FIG. 23, the process of preparing the first workpiece 8 (the first step ST1) includes cutting a first stepped portion 84a (see FIG. 22) between a first section 83 of the first workpiece 8 and a recess 85 of the first workpiece 8 to form the above-described first surface 82a. In addition, in the example illustrated in FIG. 24, the process of preparing the first workpiece 8 (the first step ST1) includes cutting a second stepped portion 84b (see FIG. 23) between a second section 86 of the first workpiece 8 and the recess 85 of the first workpiece 8 to form the above-described second surface 82b.

As illustrated in FIG. 25, it is assumed that the friction stir welding for welding the first workpiece 8 and the second workpiece 9 together is performed in a state in which the first stepped portion 84a and the second stepped portion 84b are present. In this case, due to the presence of the stepped portions (84a and 84b), a void easily occurs in the welded portion between the first workpiece 8 and the second workpiece 9. In the example illustrated in FIG. 25, when the probe 21 traverses the recess 85, by decreasing the moving speed of the probe 21 in the first direction DR1, the occurrence of such a void is reduced. However, a decrease in the moving speed of the probe 21 causes an increase in machining time. In addition, the decrease in the moving speed of the probe 21 may cause the occurrence of a large burr.

In contrast, as illustrated in FIGs. 23 and 24, the first stepped portion 84a and the second stepped portion 84b are cut, and then, when the friction stir welding is performed as illustrated in FIGs.5 to 9, it becomes possible to prevent, or reduce the occurrence of the void in the welded portion between the first workpiece 8 and the second workpiece 9 without decreasing the moving speed of the probe 21 in the first direction DR1.

It is to be noted that in the example illustrated in FIG. 22, the recess 85, which includes the first stepped portion 84a and the second stepped portion 84b, is formed by cutting. However, the recess 85 may be formed in any method other than cutting. For example, the recess 85 may be formed by striking part of the casting with a hammer or the like. In addition, the recess 85 may be formed by welding a first piece 88a of the first workpiece 8 after being cut out and a second piece 88b of the first workpiece 8 after being cut out together.

As illustrated in FIG. 21, the first workpiece 8 may include a welded portion 87 (more specifically, the first workpiece 8 may be a workpiece in which the first piece 88a and the second piece 88b are welded together in the welded portion 87). Also, as illustrated in FIG. 22, the process of preparing the first workpiece 8 (the first step ST1) may include cutting the welded portion 87 and a part around the welded portion 87 to form the recess 85.

As illustrated in FIG. 26, it is assumed that the friction stir welding for welding the first workpiece 8 and the second workpiece 9 together is performed in a state in which the welded portion 87 protrudes from the surface of the first workpiece 8. In this case, due to the presence of the welded portion 87, which protrudes, a void is easily generated in the welded portion between the first workpiece 8 and the second workpiece 9.

In contrast, as illustrated in FIG. 22, the welded portion 87 is cut, and the first stepped portion 84a and the second stepped portion 84b are cut, as illustrated in FIGs. 23 and 24. Then, when the friction stir welding is performed as illustrated in FIGs.5 to 9, it becomes possible to prevent, or reduce the occurrence of the void in the welded portion between the first workpiece 8 and the second workpiece 9 without decreasing the moving speed of the probe 21 in the first direction DR1.

In examples illustrated in FIGs. 22 to 24, the welded portion 87 is cut, and then the first stepped portion 84a and the second stepped portion 84b are cut. Thus, the above-described first surface 82a and the above-described second surface 82b are formed.

As illustrated in FIGs. 22 to 24, or FIGs. 27 and 28, the above-described first surface 82a and the above-described second surface 82b may be formed by cutting the welded portion 87 and the part around the welded portion 87. In the examples illustrated in FIGs. 22 to 24, by cutting the welded portion 87 and the part around the welded portion 87, the first stepped portion 84a and the second stepped portion 84b are formed. Then, by cutting the first stepped portion 84a and the second stepped portion 84b, the above-described first surface 82a and the above-described second surface 82b are formed. Alternatively, as illustrated in FIGs. 27 and 28, by cutting the welded portion 87 and the part around the welded portion 87, the above-described first surface 82a and the above-described second surface 82b may be formed directly (in other words, without forming a stepped portion).

### (Recessed portion 81)

In an example illustrated in FIG. 29, the recessed portion 81 of the first workpiece 8 extends in a fourth direction DR4, which is perpendicular to the second direction DR2. The recessed portion 81 may be a linear-shaped recessed portion extending in the fourth direction DR4. In the example illustrated in FIG. 29, the welded portion 87 also extends in the fourth direction DR4. The welded portion 87 may be a linear-shaped welded portion extending in the fourth direction DR4.

A direction opposite to the fourth direction DR4 is defined as a fifth direction DR5. In the example illustrated in FIG. 29, an end portion 81e of the recessed portion 81 on the fourth direction DR4 side is open. Also, an end portion 81f of the recessed portion 81 on the fifth direction DR5 side is open.

In the overlaying process (the third step ST3), the second workpiece 9 is overlaid with the first workpiece 8 in such a manner that the upper surface of the first workpiece 8 and the lower surface of the second workpiece 9 are in contact with each other.

In an example illustrated in FIG. 30, in a state in which the second workpiece 9 is overlaid with the first workpiece 8, the end portion 81e of the recessed portion 81 on the fourth direction DR4 side is open. Alternatively or additionally, in a state in which the second workpiece 9 is overlaid with the first workpiece 8, the end portion 81f of the recessed portion 81 on the fifth direction DR5 side (see FIG. 29) may be open.

In the state in which the second workpiece 9 is overlaid with the first workpiece 8, in a case where at least one of the end portion 81e of the recessed portion 81 on the fourth direction DR4 side and the end portion 81f of the recessed portion 81 on the fifth direction DR5 side is open, such an open end portion (81e and/or 81f) functions as an air vent port.

More specifically, when the probe 21 moves in the first direction DR1 traversing the recessed portion 81, the material of the second workpiece 9 enters the space in the recessed portion 81. In this situation, in accordance with the entry of the material, the air present in the space in the recessed portion 81 is at least partially discharged to the outside of the recessed portion 81 through the open end portion (81e and/or 81f). In this manner, the friction stir welding for welding the first workpiece 8 and the second workpiece 9 together is performed, while the occurrence of a void in the welded portion between the first workpiece 8 and the second workpiece 9 is prevented.

### (Movement Path of Probe 21)

As indicated by a broken line arrow in FIG. 30, in the welding process (the fourth step ST4), when the probe 21 traverses the recessed portion 81, the probe 21 may move along a linear path PA1. In other words, the above-described first direction DR1 may be a direction along the linear path PA1. It is to be noted that the first direction DR1 may be a direction perpendicular to the extending direction of the recessed portion 81 (in other words, the fourth direction DR4), or may be a direction inclined with respect to the extending direction of the recessed portion 81.

Alternatively, as indicated by a broken line arrow in FIG. 31, in the welding process (the fourth step ST4), when the probe 21 traverses the recessed portion 81, the probe 21 may move along a curved path PA2. In other words, the above-described first direction DR1 may be a direction along the curved path PA2.

As illustrated in FIG. 16, it is assumed that the second workpiece 9 has a disk shape, and the friction stir welding for welding together the first workpiece 8 and an outer peripheral edge portion of the second workpiece 9 is performed. In this case, the probe 21 may move along a circular path or an arc-shaped path PA3. In other words, the above-described first direction DR1 may be a direction along the circular path or the arc-shaped path PA3.

### (Moving Speed of Probe 21)

The moving speed of the probe 21 (see FIG. 34) in the direction along the first direction DR1 when the probe 21 traverses each at least part of the first region RG1 and at least part of the fifth region RG5 and the moving speed of the probe 21 in the direction along the first direction DR1 when the probe 21 traverses each the second region RG2 and the third region RG3 may be identical to each other. In addition, the moving speed of the probe 21 in the direction along the first direction DR1 when the probe 21 traverses each the second region RG2 and the third regions RG3 and the moving speed of the probe 21 in the direction along the first direction DR1 when the probe 21 traverses the fourth region RG4 may be identical to each other. In a case where the moving speed of the probe 21 is constant, the occurrence of a large burr on the surface of the second workpiece 9 is prevented, or reduced.

### (Machine tool 1A)

As illustrated in FIGs. 17 to 20, the machine tool 1A according to the first embodiment includes a workpiece support member 3, the machining head 4, a rotation drive 44, the mover 5, and the controller 7.

The workpiece support member 3 supports the first workpiece 8 and the second workpiece 9. The workpiece support member 3 includes, for example, a table 31, to which the first workpiece 8 and the second workpiece 9 are fixed. In the examples illustrated in FIGs. 17 to 20, the table 31 directly supports the first workpiece 8. The table 31 also supports the second workpiece 9 via the first workpiece 8.

The machining head 4 supports the probe 21 of the friction stir welding tool 2 so that the probe 21 is rotatable about the rotation axis AX. The machining head 4 includes the rotation body 42 and a frame 43, which supports the rotation body 42 to be rotatable. In the examples illustrated in FIGs. 17 to 20, the rotation body 42 supports the probe 21 via the probe holder HD.

The rotation drive 44 rotates the rotation body 42 about a first axis AX1 to rotate the probe 21 about the rotation axis AX. In the examples illustrated in FIGs. 17 to 20, the first axis AX1, which is the rotation axis of the rotation body 42, and the rotation axis AX of the probe 21 are coaxial with each other.

The mover 5 moves the machining head 4 relative to the workpiece support member 3. The controller 7 controls the rotation drive 44 and the mover 5.

The controller 7 is capable of performing a friction stir welding mode M1. The friction stir welding mode M1 is a mode of performing the friction stir welding for welding the first workpiece 8 and the second workpiece 9 together in a state in which the second workpiece 9 is overlaid on the first workpiece 8 including the recessed portion 81, which is defined by the plurality of surfaces 82 including the first surface 82a having a height gradually decreasing in the first direction DR1 and the second surface 82b having a height gradually increasing in the first direction DR1.

As illustrated in FIG. 5, the friction stir welding mode M1 includes moving the friction stir welding tool 2 in the first direction DR1 so that the probe 21 traverses at least part of the first region RG1 in which the first workpiece 8 and the second workpiece 9 are in contact with each other.

As illustrated in FIG. 6, the friction stir welding mode M1 includes moving the friction stir welding tool 2 in the second direction DR2 so as to follow a change in height of the first surface 82a, while moving the friction stir welding tool 2 in the first direction DR1 so that the probe 21 traverses the second region RG2 in which the gap between the first surface 82a and the second workpiece 9 gradually increases from zero in the first direction DR1.

As illustrated in FIG. 8, the friction stir welding mode M1 includes moving the friction stir welding tool 2 in the third direction DR3 so as to follow a change in height of the second surface 82b, while moving the friction stir welding tool 2 in the first direction DR1 so that the probe 21 traverses the third region RG3 in which the gap between the second surface 82b and the second workpiece 9 gradually decreases to zero in the first direction DR1.

Additionally, as illustrated in FIG. 7, the friction stir welding mode M1 may include moving the friction stir welding tool 2 in the first direction DR1 so that the probe 21 traverses the fourth region RG4 between the second region RG2 and the third region RG3.

Additionally, as illustrated in FIG. 9, the friction stir welding mode M1 may include moving the friction stir welding tool 2 in the first direction DR1 so that the probe 21 traverses at least part of the fifth region RG5, which is located further in the first direction DR1 than the third region RG3.

When the probe 21 moves in the first direction DR1 traversing each the second region RG2 and the third region RG3, the controller 7 controls the position of the friction stir welding tool 2 (more specifically, the position of the friction stir welding tool 2 in the direction along the rotation axis AX) in order to reduce the fluctuation in the axial load F received by the friction stir welding tool 2 from the first workpiece 8 and the second workpiece 9. The controller 7 may control the position of the friction stir welding tool 2 (more specifically, the position of the friction stir welding tool 2 in the direction along the rotation axis AX) so as to keep constant the axial load F received by the friction stir welding tool 2 from the first workpiece 8 and the second workpiece 9.

Additionally, when the probe 21 moves in the first direction DR1 traversing each the first region RG1, the fourth region RG4, and the fifth region RG5, the controller 7 may control the position of the friction stir welding tool 2 (more specifically, the position of the friction stir welding tool 2 in the direction along the rotation axis AX) so as to reduce the fluctuation in the axial load F received by the friction stir welding tool 2 from the first workpiece 8 and the second workpiece 9 (more specifically, to keep the axial load F constant).

In the machine tool 1A according to the first embodiment, the controller 7 is capable of performing the friction stir welding mode M1. While the friction stir welding mode M1 is being performed, the friction stir welding tool 2 moves in the second direction DR2 or the third direction DR3 so as to follow a change in height of each the first surface 82a and the second surface 82b, while moving in the first direction DR1. Therefore, a defect (more specifically, a void) hardly occurs in the welded portion between the first workpiece 8 and the second workpiece 9, as compared with a case where the friction stir welding tool 2 is not made to follow the change in height of each the first surface 82a and the second surface 82b (for example, as compared with a case where the friction stir welding tool 2 is moved completely horizontally).

In the machine tool 1A according to the first embodiment, when the probe 21 moves in the first direction DR1 traversing each the second region RG2 and the third region RG3, the controller 7 controls the position of the friction stir welding tool 2 so as to reduce the fluctuation in the axial load F received by the friction stir welding tool 2 from the first workpiece 8 and the second workpiece 9. Thus, the probe 21, which moves in the second direction DR2 or the third direction DR3, while moving in the first direction DR1, is prevented from being pressed against the first workpiece 8 and the second workpiece 9 with excessively small force or excessively large force. In this manner, the occurrence of a void due to excessively small pressing force or the occurrence of a large burr due to excessively large pressing force is reduced.

### (Optional and Additional Configurations)

Subsequently, with reference to FIGs. 1 to 34, optional and additional configurations that are adoptable in the machine tool 1A according to the first embodiment (or the friction stir welding method according to the first embodiment) will be described.

### (Friction Stir Welding Tool 2)

In the example illustrated in FIG. 5, the friction stir welding tool 2 includes the probe 21 and a shoulder 23. The probe 21 is inserted into the second workpiece 9 when the welding process (the above-described fourth step ST4) is performed. When the welding process (the above-described fourth step ST4) is performed, a tip end of the probe 21 may reach the first workpiece 8.

The shoulder 23 presses a surface (that is, an upper surface) of the second workpiece 9 on the third direction side. In the example illustrated in FIG. 5, the shoulder 23 is a rotation shoulder that rotates about the rotation axis AX. The shoulder 23 (more specifically, the rotation shoulder) and the probe 21 may be made up of an integrally molded member. Alternatively, as illustrated in FIG. 32, the shoulder 23 may be a fixed shoulder that does not rotate together with the probe 21. In this case, the probe 21 rotates about the rotation axis AX relative to the fixed shoulder.

In the examples illustrated in FIGs. 6, 8, and 32, when the probe 21 moves in the second direction DR2 (or the third direction DR3), the shoulder 23 is configured to move in the second direction DR2 (or the third direction DR3) together with the probe 21. More specifically, when the welding process (the fourth step ST4) is performed, the probe 21 is substantially incapable of moving relative to the shoulder 23 in a direction parallel to the second direction DR2.

In this case, as illustrated in FIG. 6, when the probe 21 moves in the first direction DR1 traversing the second region RG2, both the probe 21 and the shoulder 23 move in the second direction DR2 so as to follow a change in height of the first surface 82a. In addition, as illustrated in FIG. 8, when the probe 21 moves in the first direction DR1 traversing the third region RG3, both the probe 21 and the shoulder 23 move in the third direction DR3 so as to follow a change in height of the second surface 82b.

### (Probe Holder HD)

The probe holder HD holds the probe 21 of the friction stir welding tool 2. In the examples illustrated in FIGs. 17 to 20, the rotation body 42 of the machining head 4 supports the probe 21 via the probe holder HD. The rotation body 42 of the machining head 4 may support both the probe 21 and the shoulder 23 via the probe holder HD. Alternatively, as illustrated in FIG. 32, the rotation body 42 of the machining head 4 may support the probe 21 via the probe holder HD, and the frame 43 of the machining head 4 may support the shoulder 23.

As illustrated in FIG. 17, the probe holder HD may include the sensor 12a, which detects the axial load F received by the friction stir welding tool 2 from the first workpiece 8 and the second workpiece 9.

In the example illustrated in FIG. 17, the shoulder 23 is a rotation shoulder that rotates together with the probe 21, and the axial load F detected by the sensor 12a is a total load of a load in the third direction DR3 received by the probe 21 from the first workpiece 8 and the second workpiece 9 and the load in the third direction DR3 received by the shoulder 23 from the second workpiece 9. In a case where the shoulder 23 is the fixed shoulder that does not rotate together with the probe 21, the axial load F detected by the sensor 12a may be the load in the third direction DR3 received by the probe 21 from the first workpiece 8 and the second workpiece 9.

The sensor 12a transmits the signal data S1 indicating the axial load F to the controller 7 directly or indirectly via an optional relay. The transmission may be performed in a wireless or wired manner. In the example illustrated in FIG. 17, the controller 7 acquires the signal data S1 indicating the axial load F from the sensor 12a via a data receiver 13 and a communication interface 14.

### (Machining Head 4)

As illustrated in FIG. 18, the machining head 4 may include the sensor 12b, which detects the axial load F received by the friction stir welding tool 2 from the first workpiece 8 and the second workpiece 9.

In the example illustrated in FIG. 18, the shoulder 23 is a rotation shoulder that rotates together with the probe 21, and the axial load F detected by the sensor 12b is a total load of the load in the third direction DR3 received by the probe 21 from the first workpiece 8 and the second workpiece 9 and the load in the third direction DR3 received by the shoulder 23 from the second workpiece 9. In a case where the shoulder 23 is the fixed shoulder that does not rotate together with the probe 21, the axial load F detected by the sensor 12b may be the above-described total load, or may be a load in the third direction DR3 received by the probe 21 from the first workpiece 8 and the second workpiece 9.

The sensor 12b transmits the signal data S1 indicating the axial load F to the controller 7 directly or indirectly via an optional relay. The transmission may be performed in a wireless or wired manner. In the example illustrated in FIG. 18, the controller 7 acquires the signal data S1 indicating the axial load F from the sensor 12b via the data receiver 13 and the communication interface 14.

### (Mover 5)

The mover 5 moves the machining head 4 relative to the workpiece support member 3. The mover 5 includes a first mover 51, which moves the machining head 4. Alternatively or additionally, the mover 5 may include a second mover 58, which moves the workpiece support member 3.

The first mover 51 includes a first moving body 51a, which supports the machining head 4, and a first drive 51b, which moves the machining head 4 relative to the first moving body 51a. In the examples illustrated in FIGs. 17 to 20 and 32, the first drive 51b moves the machining head 4 in a direction parallel to the second direction DR2 (for example, the vertical direction). The first drive 51b may include a Z-axis motor.

Additionally, the first mover 51 may include a support body 52a, which supports the first moving body 51a, and a second drive 52b, which moves the first moving body 51a relative to the support body 52a in a direction perpendicular to the second direction DR2. The second drive 52b may be a device capable of moving the first moving body 51a two-dimensionally in a direction parallel to a horizontal plane (for example, the second drive 52b may include an X-axis motor and a Y-axis motor).

As illustrated in FIG. 19 or FIG. 32, the first drive 51b may include the sensor 12c, which detects the axial load F received by the friction stir welding tool 2 from the first workpiece 8 and the second workpiece 9.

In the example illustrated in FIG. 19 or FIG. 32, the axial load F detected by the sensor 12c is the total load of the load in the third direction DR3 received by the probe 21 from the first workpiece 8 and the second workpiece 9 and the load in the third direction DR3 received by the shoulder 23 from the second workpiece 9.

The sensor 12c transmits the signal data S1 indicating the axial load F to the controller 7 directly or indirectly via an optional relay. The transmission may be performed in a wireless or wired manner. In the example illustrated in FIG. 19 or FIG. 32, the controller 7 acquires the signal data S1 indicating the axial load F from the sensor 12c via the data receiver 13 and the communication interface 14.

The first mover 51 may be a device that moves the machining head 4 three-dimensionally. For example, the first mover 51 may be capable of moving the machining head 4 in a direction along X-axis, moving the machining head 4 in a direction along Y-axis, and moving the machining head 4 in a direction along Z-axis. In the examples illustrated in FIGs. 17 to 20 and 32, Z-axis is an axis parallel to the vertical direction. In addition, Z-axis is parallel to the second direction DR2.

In the examples illustrated in FIGs. 17 to 20 and 32, the second mover 58 includes a third drive 58b (for example, a table drive), which moves the workpiece support member 3, such as the table 31, relative to a base 30. In the examples illustrated in FIGs. 17 to 20 and 32, the third drive 58b moves the workpiece support member 3 relative to the base 30 in a direction parallel to the horizontal plane (in other words, a direction parallel to an XY plane).

### (Rotation drive 44)

The rotation drive 44 rotates the probe 21 about the rotation axis AX. The rotation drive 44 may rotate both the probe 21 and the shoulder 23 about the rotation axis AX. Alternatively, the rotation drive 44 may rotate the probe 21 about the rotation axis AX independently of the shoulder 23. The rotation drive 44 includes, for example, the motor 44m. The motor 44m may be an AC induction motor, an AC synchronous motor, or a DC motor.

As illustrated in FIG. 20, the rotation drive 44 may transmit data S2 indicating a drive current value of the motor 44m to the controller 7 directly or indirectly via an optional relay. The transmission may be performed in a wireless or wired manner. In the example illustrated in FIG. 20, the controller 7 acquires the data S2 indicating the drive current value of the motor 44m from the rotation drive 44 via the data receiver 13 and the communication interface 14. Alternatively or additionally, a first controller 71a, which controls the mover 5, may acquire data indicating the drive current command value of the motor 44m from a second controller 71b, which controls the motor 44m.

### (Controller 7)

The controller 7 controls the rotation drive 44 and the mover 5. In the examples illustrated in FIGs. 17 to 20 and 32, the controller 7 includes the first controller 71a, which that controls the mover 5, and the second controller 71b, which controls the rotation drive 44 (more specifically, the motor 44m).

Upon receipt of a first rotation command R1 from the controller 7 (more specifically, the second controller 71b), the rotation drive 44 rotates the probe 21 about the rotation axis AX.

Upon receipt of a movement command C from the controller 7 (more specifically, the first controller 71a), the mover 5 moves the machining head 4 and/or the workpiece support member 3. For example, upon receipt of a first movement command C1 from the controller 7 (more specifically, the first controller 71a), the second drive 52b moves the machining head 4 in a direction perpendicular to the second direction DR2 (more specifically, a direction parallel to the horizontal plane). In addition, upon receipt of a second movement command C2 from the controller 7 (more specifically, the first controller 71a), the first drive 51b moves the machining head 4 in a direction parallel to the second direction DR2 (more specifically, a direction parallel to the vertical direction). In addition, upon receipt of a movement command C4 from the controller 7 (more specifically, the first controller 71a), the third drive 58b moves the workpiece support member 3 in the direction parallel to the horizontal plane.

An example of the controller 7 will be described in more detail with reference to FIG. 33. In an example illustrated in FIG. 33, the controller 7 includes a hardware processor 70 (hereinafter, simply referred to as the "processor 70"), a memory 72, a communication circuit 74, and an input device 76 (for example, a display 762 equipped with a touch panel). The processor 70, the memory 72, the communication circuit 74, and the input device 76 are connected with one another through a bus 78.

The memory 72 is a storage medium readable by the processor 70 of the controller 7. The memory 72 may be, for example, a non-volatile or volatile semiconductor memory such as a RAM, a ROM, or a flash memory, may be a magnetic disk, or may be a memory in another format.

The memory 72 stores data and a program 722. In the example illustrated in FIG. 33, the program 722 stored in the memory 72 includes a first program 722a for the friction stir welding.

For example, data necessary for the friction stir welding to be performed with the use of the friction stir welding tool 2 (first path data 726a for defining the first movement path along which the probe 21 is to move) may be input into the controller 7 via the input device 76, or may be input into the controller 7 via the communication circuit 74 from another computer. The data necessary for the friction stir welding is stored in the memory 72.

The input device 76 is not limited to the display 762 equipped with a touch panel. For example, the controller 7 may include an input device 76 such as a button, a switch, a lever, a pointing device, or a keyboard, and a display for displaying data that has been input into the input device 76 or other information. In addition, a plurality of computers may cooperate to function as the controller 7. Further, the memory 72 may be distributed in a plurality of locations. For example, the memory 72 may be partially included in a cloud storage.

The processor 70 of the controller 7 executes the program 722 stored in the memory 72, and thus the controller 7 generates a control command. In addition, the communication circuit 74 transmits such a control command to devices to be controlled (more specifically, the rotation drive 44, the mover 5, and/or any other device). In this manner, the processor 70 executes the program 722, and thus the controller 7 is capable of controlling the rotation drive 44 and the mover 5.

### (Friction Stir Welding Mode M1)

As illustrated in FIG. 34, the controller 7 is capable of performing the friction stir welding mode M1 of the friction stir welding for welding the first workpiece 8 and the second workpiece 9 together.

The friction stir welding mode M1 includes transmitting, by the controller 7, the first movement command C1 to the mover 5 (more specifically, the second drive 52b) so that the probe 21 in a rotating state moves along the first movement path PA that traverses the recessed portion 81 (see FIG. 33). The friction stir welding mode M1 also includes transmitting, by the controller 7, the second movement command C2 to the mover 5 (more specifically, the first drive 51b) in order to reduce the fluctuation in the axial load F (more specifically, to keep the above-described axial load F constant), when the probe 21 traverses the recessed portion 81.

For example, the controller 7, which executes the first program 722a, generates the first rotation command R1, and also generates the first movement command C1, based on the above-described first path data 726a stored in the memory 72. In addition, the controller 7 transmits the first rotation command R1, which has been generated, to the rotation drive 44, and transmits the first movement command C1, which has been generated, to the mover 5 (more specifically, the second drive 52b). The rotation drive 44, which receives the first rotation command R1, rotates the probe 21 about the rotation axis AX. In addition, the mover 5 (more specifically, the second drive 52b), which receives the first movement command C1, moves the probe 21 in the rotating state along the first movement path PA that traverses the recessed portion 81 (more specifically, the first movement path PA that completely traverses the recessed portion 81). It is to be noted that the first movement path PA that traverses the recessed portion 81 may be a linear path or the curved path PA2 (see FIG. 31).

Further, the controller 7, which executes the first program 722a, generates the second movement command C2 in order to reduce, suppress, reduce the fluctuation in the above-described axial load F (more specifically, to keep the above-described axial load F constant).

For example, when the probe 21 moves along the first movement path PA, the controller 7 receives signal data indicating the axial load F from the sensor 12, or acquires data indicating the load of the motor 44m. In addition, the controller 7, which executes the first program 722a, generates the second movement command C2, based on the signal data received from the sensor 12 or the data indicating the load of the motor 44m, in order to reduce the fluctuation in the above-described axial load F (more specifically, to keep the axial load F constant).

The controller 7 transmits the second movement command C2, which has been generated, to the mover 5 (more specifically, the first drive 51b). The mover 5 (more specifically, the first drive 51b), which receives the second movement command C2, moves the probe 21 in the rotating state in the second direction DR2 or the third direction DR3. In this manner, when the probe 21 traverses the recessed portion 81, the fluctuation in the above-described axial load F is reduced (more specifically, the above-described axial load F is kept constant).

The controller 7 may transmit the first movement command C1 to the mover 5 (more specifically, the second drive 52b) so as to keep constant the movement speed of the probe 21, which moves along the first movement path PA. Since the moving speed of the probe 21 is kept constant, the occurrence of a large burr on the surface of the second workpiece 9 is prevented, or reduced, when the probe 21 traverses the recessed portion 81.

### (Second Embodiment)

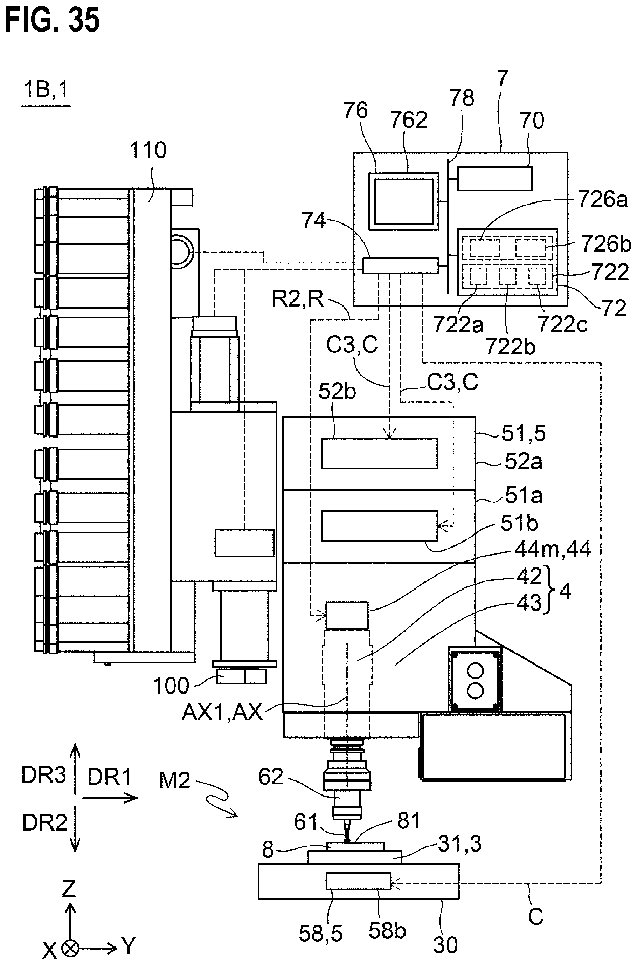

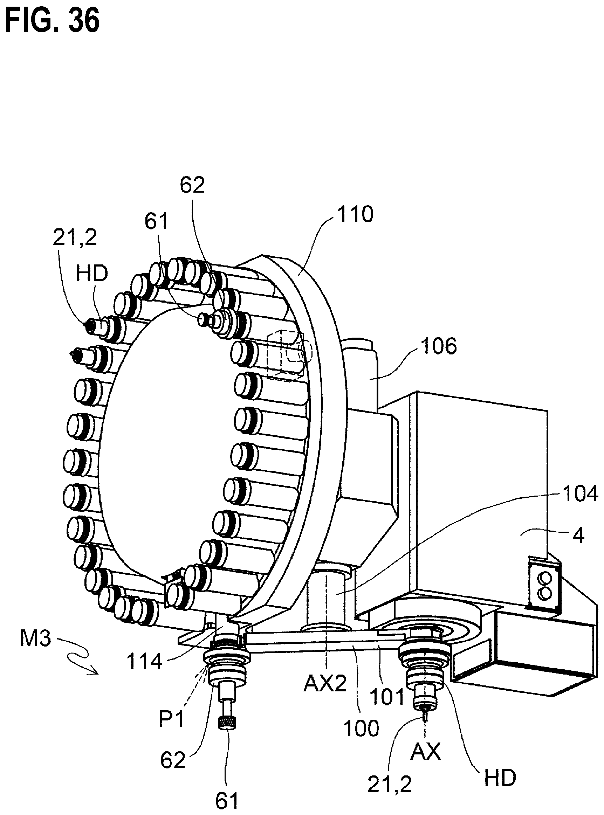

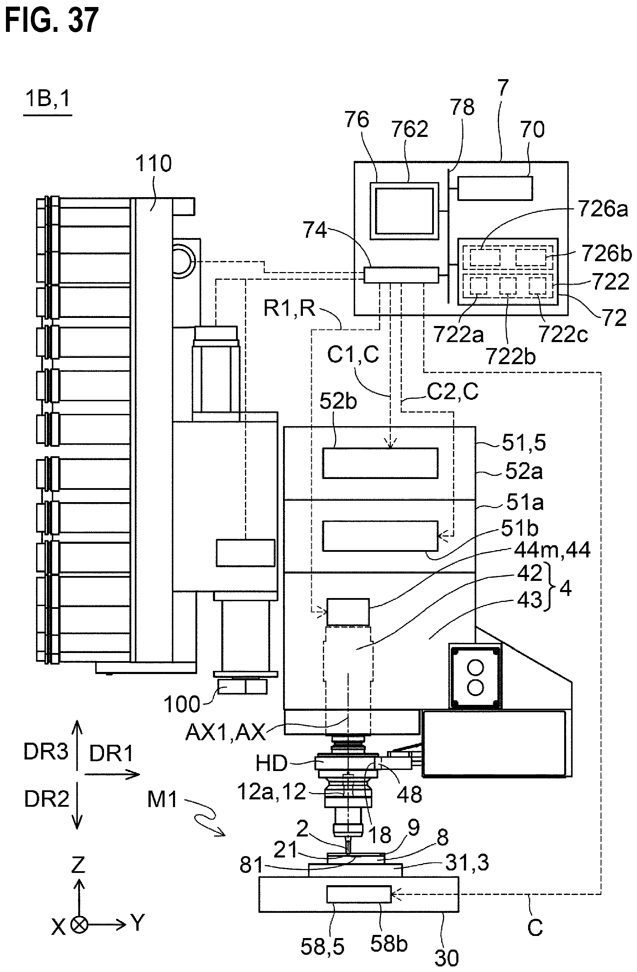

A friction stir welding method, a production method of an automotive component, and a machine tool 1B according to the second embodiment will be described with reference to FIGs. 1 to 37. FIG. 35 is a schematic illustration of the machine tool 1B according to the second embodiment. FIG. 36 is a schematic perspective view of part of the machine tool 1B according to the second embodiment. FIG. 37 is a schematic illustration of the machine tool 1B according to the second embodiment.

The second embodiment is different from the first embodiment in that the machine tool 1B is capable of cutting a first workpiece 8 to form a first surface 82a and a second surface 82b. In the other respects, the second embodiment is similar to the first embodiment.

In the second embodiment, differences from the first embodiment will be mainly described. On the other hand, in the second embodiment, repeated descriptions of the matters that have been described in the first embodiment will be omitted. Therefore, it is needless to say that the matters that have been described in the first embodiment are applicable to the second embodiment, even though they are not explicitly described in the second embodiment. On the contrary, all matters to be described in the second embodiment are applicable to the first embodiment.

As illustrated in FIG. 37, the machine tool 1B according to the second embodiment includes a workpiece support member 3, a machining head 4, a rotation drive 44, a mover 5, and a controller 7. A friction stir welding tool 2 is attachable to the machining head 4.

The friction stir welding tool 2, the workpiece support member 3, the machining head 4, the rotation drive 44, the mover 5, and the controller 7 have already been described in the first embodiment, and thus repeated descriptions of these configurations will be omitted.

The machine tool 1B according to the second embodiment cuts the first workpiece 8 using a cutting tool 61 to form the first surface 82a and the second surface 82b, which have been described in the first embodiment (see FIGs. 23 and 24 or FIGs. 27 and 28).

The second embodiment has the same effects as those of the first embodiment. Also in the second embodiment, the machine tool 1B is capable of performing both friction stir welding and cutting. Therefore, it becomes possible to perform the process from the formation of the first surface 82a and the second surface 82b to the welding of the first workpiece 8 and the second workpiece 9 efficiently and in a short period of time.

The friction stir welding method according to the second embodiment includes a first preparation process (a first step ST1), a second preparation process (a second step ST2), an overlaying process (a third step ST3), and a welding process (a fourth step ST4).

The first preparation process, the second preparation process, the overlaying process, and the welding process have been described in the first embodiment, and repeated descriptions of these steps will be omitted.

### (Optional and Additional Configurations)

Subsequently, optional and additional configurations that are adoptable in the second embodiment (or the above-described first embodiment) will be described with reference to FIGs. 1 to 37.

### (Machining Head 4)

In examples illustrated in FIGs. 35 and 37, the machining head 4 is capable of selectively holding a tool holder 62 (see FIG. 35), which holds the cutting tool 61 and a probe holder HD (see FIG. 37), which holds a probe 21. In other words, the machining head 4 functions as part of a friction stir welder, and also functions as part of a cutting apparatus.

Alternatively, the machine tool 1B may include a second machining head, in addition to the machining head 4, which holds the probe holder HD. The tool holder 62, which holds the cutting tool 61, may be attached to the second machining head.

### (Probe Holder HD)

As illustrated in FIG. 37, the probe holder HD may include a power receiver 18, which receives electric power from a power feeder 48, which is supported by the machining head 4. A sensor 12a may be electrically connected with the power receiver 18. In this case, the sensor 12a is operated by the electric power received from the power receiver 18.

### (Automatic Tool Changer 100)

In the example illustrated in FIG. 36, the machine tool 1B includes an automatic tool changer 100. The automatic tool changer 100 is capable of changing a tool holder 62 held by the machining head 4 (more specifically, a rotation body 42 of the machining head 4) to a probe holder HD for holding the probe 21. The automatic tool changer 100 is also capable of changing the probe holder HD held by the machining head 4 (more specifically, the rotation body 42 of the machining head 4) to the tool holder 62 for holding the cutting tool 61.

FIG. 36 illustrates a state immediately after the automatic tool changer 100 changes the tool holder 62 held by the machining head 4 to the probe holder HD for holding the probe 21.

In the example illustrated in FIG. 36, the automatic tool changer 100 includes: a tool change arm 101; an arm rotation device 104, which rotates the tool change arm 101; and an arm mover 106, which linearly moves the tool change arm 101. The arm rotation device 104 rotates the tool change arm 101 about a second axis AX2. In addition, the arm mover 106 moves the tool change arm 101 in a direction parallel to the second axis AX2.

In the example illustrated in FIG. 36, the tool change arm 101 is capable of gripping the probe holder HD and the tool holder 62 at the same time. In other words, the tool change arm 101 includes a first grip portion for gripping the probe holder HD and a second grip portion for gripping the tool holder 62.

### (Stocker 110)

In the example illustrated in FIG. 36, the machine tool 1B includes a stocker 110, which is capable of storing the probe holder HD and the tool holder 62. The stocker 110 is capable of storing a plurality of holders including the probe holder HD and the tool holder 62.

The stocker 110 may include a holder remover 114, which moves the probe holder HD or the tool holder 62, which is stored in the stocker 110, to a standby position P1 to be accessible by the automatic tool changer 100.

### (Controller 7)

The controller 7 controls the rotation drive 44 and the mover 5. Additionally, the controller 7 may control the automatic tool changer 100 and/or the stocker 110.

In the example illustrated in FIG. 35 or FIG. 37, by transmitting a rotation command R to a rotation drive 44, the controller 7 rotates the rotation body 42, which holds the probe holder HD or the tool holder 62, about the first axis AX1. More specifically, the controller 7 transmits a rotation command R to the rotation drive 44, and the rotation drive 44, which receives the rotation command R, rotates the rotation body 42 about the first axis AX1.

The controller 7 transmits a movement command C to the mover 5 to move the machining head 4 relative to the workpiece support member 3. For example, by transmitting the movement command C to the first drive 51b, the controller 7 moves the machining head 4 in a direction parallel to the second direction DR2. In addition, by transmitting the movement command C to the second drive 52b, the controller 7 moves the machining head 4 in a direction perpendicular to the second direction DR2. Further, by transmitting the movement command C to the third drive 58b, the controller 7 moves the workpiece support member 3 in a direction parallel to the horizontal plane.

By transmitting a tool change command to the automatic tool changer 100, the controller 7 changes the tool holder 62 (or the probe holder HD) held by the machining head 4 to the probe holder HD (or the tool holder 62). More specifically, the controller 7 transmits a first tool change command to the automatic tool changer 100, and the automatic tool changer 100 receives the first tool change command, and changes the tool holder 62 held by the machining head 4 to the probe holder HD for holding the probe 21. In addition, the controller 7 transmits a second tool change command to the automatic tool changer 100, and the automatic tool changer 100 receives the second tool change command, and changes the probe holder HD held by the machining head 4 to the tool holder 62 for holding the cutting tool 61.

By transmitting a removal command to the stocker 110, the controller 7 may move the probe holder HD or the tool holder 62, which is stored in stocker 110, to the standby position P1 to be accessible by the automatic tool changer 100. For example, the controller 7 transmits the removal command to the stocker 110, and transmits the first tool change command to the automatic tool changer 100. The stocker 110 receives the removal command, and moves the probe holder HD to the standby position P1. In addition, the automatic tool changer 100 receives the first tool change command, and changes the tool holder 62 held by the machining head 4 to the probe holder HD, which has been moved to the standby position P1.

As illustrated in FIG. 35, the controller 7 includes a processor 70, a memory 72, a communication circuit 74, and an input device 76. The processor 70, the memory 72, the communication circuit 74, and the input device 76 have already been described in the first embodiment, and repeated descriptions of these configurations will be omitted.

The memory 72 stores data and a program 722. The program 722, which is stored in the memory 72, may include a first program 722a for friction stir welding, a second program 722b for cutting, and a third program 722c for tool change.

Data necessary for the cutting with use of the cutting tool 61 (examples including shape data of the first workpiece 8 and second path data 726b, which defines a second movement path for the cutting tool 61 to move so as to form a recessed portion 81 on the first workpiece 8) may be input into the controller 7 via an input device 76, or may be input into the controller 7 from another computer via the communication circuit 74. The data necessary for the cutting is stored in the memory 72.

Data necessary for the friction stir welding with use of the friction stir welding tool 2 (examples including the first path data 726a, which defines the first movement path for the probe 21 to move) may be input into the controller 7 via the input device 76, or may be input into the controller 7 from another computer via the communication circuit 74. The data necessary for the friction stir welding is stored in the memory 72.

The processor 70 of the controller 7 executes the program 722 stored in the memory 72, and thus the controller 7 generates a control command. In addition, the communication circuit 74 transmits the control command to devices to be controlled (more specifically, the rotation drive 44, the mover 5, the automatic tool changer 100, the stocker 110, and/or any other device). The processor 70 executes the program 722 in this manner, and thus the controller 7 is capable of controlling the rotation drive 44, the mover 5, the automatic tool changer 100, and the stocker 110.

### (Recessed Portion Forming Mode M2)

In the example illustrated in FIG. 35, the controller 7 is capable of performing a recessed portion forming mode M2. The recessed portion forming mode M2 is a mode of moving the cutting tool 61 in a rotating state along a second movement path PB (see FIG. 24 or FIG. 28, as needed) so as to form the recessed portion 81 on the first workpiece 8. By performing the recessed portion forming mode M2, the recessed portion 81, which includes the first surface 82a and the second surface 82b as described above, is formed on the first workpiece 8.

As illustrated in FIG. 35, when performing the recessed portion forming mode M2, the controller 7 moves the cutting tool 61 in the rotating state along the above-described second movement path PB so as to form the recessed portion 81 on the first workpiece 8. More specifically, the controller 7 transmits a second rotation command R2 to the rotation drive 44, and also transmits a third movement command C3 to the mover 5 to move the cutting tool 61 along the second movement path PB.

For example, the controller 7, which executes the second program 722b, generates the second rotation command R2, and also generates the above-described third movement command C3, based on the above-described second path data 726b stored in the memory 72. The controller 7 also transmits the second rotation command R2 that has been generated to the rotation drive 44, and transmits the third movement command C3 that has been generated to the mover 5 (more specifically, the first drive 51b and the second drive 52b). The rotation drive 44, which receives the second rotation command R2, rotates the cutting tool 61 about the rotation axis AX. The mover 5 (more specifically, the first drive 51b and the second drive 52b) moves the cutting tool 61 in the rotating state along the second movement path PB. In this manner, the recessed portion 81, which is defined by the plurality of surfaces 82 including the first surface 82a and the second surface 82b, is formed on the first workpiece 8.

### (Tool Change Mode M3)

In the example illustrated in FIG. 36, the controller 7 is capable of performing a tool change mode M3. The tool change mode M3 is a mode of changing the tool holder 62 held by the machining head 4 (that is, the tool holder 62, which holds the cutting tool 61) to the probe holder HD for holding the probe 21.

More Specifically, after performing the recessed portion forming mode M2, the controller 7 transmits a first tool change command to the automatic tool changer 100 to change the tool holder 62, which is held by the machining head 4 and which holds the cutting tool 61, to the probe holder HD for holding the probe 21.

For example, the controller 7, which executes the third program 722c, generates the first tool change command. The controller 7 also transmits the first tool change command to the automatic tool changer 100. The automatic tool changer 100, which receives the first tool change command, changes the tool holder 62 held by the machining head 4 to the probe holder HD for holding the probe 21.

### (Friction Stir Welding Mode M1)

As illustrated in FIG. 37, after performing the tool change mode M3, the controller 7 is capable of performing the friction stir welding mode M1. The friction stir welding mode M1 includes moving the probe 21 in the rotating state along the first movement path PA traversing the above-described recessed portion 81 (more specifically, the first movement path PA, which completely traverses the above-described recessed portion 81). Since the friction stir welding mode M1 has already been described in the first embodiment, repeated description of the friction stir welding mode M1 will be omitted.

### (Friction Stir Welding Method)

The above-described first preparation process (the first step ST1) may include generating, by the controller 7, the above-described third movement command C3, based on the above-described second path data 726b stored in the memory 72. The first preparation process (first step ST1) may also include moving, by the mover 5, which receives the third movement command C3, the cutting tool 61 in the rotating state along the above-described second movement path PB. The cutting tool 61 in the rotating state moves along the second movement path PB, and thus the recessed portion 81, which is defined by the plurality of surfaces 82 including the first surface 82a and the second surface 82b, is formed on the first workpiece 8.

The above-described first preparation process (the first step ST1) may include changing, by the automatic tool changer 100 for receiving the first tool change command from the controller 7, the tool holder 62 held by the machining head 4 to the probe holder HD for holding the probe 21.

The above-described welding process (the fourth step ST4) may include generating, by the controller 7, the above-described first movement command C1, based on the above-described first path data 726a stored in the memory 72. The above-described welding process (the fourth step ST4) may also include moving, by the mover 5 (more specifically, the second drive 52b) for receiving the first movement command C1, the probe 21 in the rotating state along the above-described first movement path PA. The probe 21 in the rotating state moves along the first movement path PA, and the friction stir welding for welding the first workpiece 8 and the second workpiece 9 together is performed.

In addition, the above-described welding process (the fourth step ST4) may include moving, by the controller 7, the probe 21 in the second direction DR2 in order to reduce a fluctuation in the axial load F received by the friction stir welding tool 2 from the first workpiece 8 and the second workpiece 9 (more specifically, to keep the axial load F constant), when the probe 21 in the rotating state traverses the recessed portion 81, and then moving the probe 21 in the third direction DR3.

More specifically, the above-described welding process (the fourth step ST4) may include: (1) generating, by the controller 7, the second movement command C2, based on signal data received from the sensor 12 or data indicating the load of the motor 44m, in order to reduce the fluctuation in the above-described axial load F (more specifically, to keep the axial load F constant); (2) transmitting, by the controller 7, the second movement command C2 to the mover 5 (more specifically, the first drive 51b); and (3) moving, by the mover 5 (more specifically, the first drive 51b) for receiving the second movement command C2, the probe 21 in the second direction DR2, and then moving the probe 21 in the third direction DR3.

### (Program 722)

The program 722 (more specifically, the program 722 including a first program 722a, a second program 722b, and a third program 722c) according to an embodiment is a program for causing the machine tool 1 (more specifically, the controller 7 of the machine tool 1) to perform the first preparation process (the first step ST1) and the welding process (the fourth step ST4) in the above-described friction stir welding method.

More specifically, the program 722 according to an embodiment is a program for causing the machine tool 1 (more specifically, the controller 7 of the machine tool 1) to perform the friction stir welding method. The friction stir welding method includes: (1) a process of preparing the first workpiece 8 including the recessed portion 81, which is defined by the plurality of surfaces 82 including the first surface 82a having a height gradually decreasing in the first direction DR1 and the second surface 82b having a height gradually increasing in the first direction DR1; and (2) a process of performing the friction stir welding for welding the first workpiece 8 and the second workpiece 9 together using the friction stir welding tool 2 in a state in which the first workpiece 8 and the second workpiece 9 are overlaid with each other.

As illustrated in FIGs. 23 and 24 or FIGs. 27 and 28, the process of preparing the first workpiece 8 (the first step ST1) includes forming the recessed portion 81 using the cutting tool 61. Since the details of the process of preparing the first workpiece 8 (the first step ST1) have been described in the above-described first embodiment or the above-described second embodiment, its detailed description of the process will be omitted.

The process of performing the friction stir welding for welding the first workpiece 8 and the second workpiece 9 together (the fourth step ST4) includes: (1) moving the friction stir welding tool 2 in the first direction DR1 so that the probe 21 of the friction stir welding tool 2 traverses at least part of the first region RG1 in which the first workpiece 8 and the second workpiece 9 are in contact with each other (see FIG. 5); (2) moving the friction stir welding tool 2 in the second direction DR2 to follow a change in height of the first surface 82a, while moving the friction stir welding tool 2 in the first direction DR1 so that the probe 21 traverses the second region RG2 in which the gap between the first surface 82a and the second workpiece 9 gradually increases from zero in the first direction DR1 (see FIG. 6); and (3) moving the friction stir welding tool 2 in the third direction DR3 to follow a change in height of the second surface 82b, while moving the friction stir welding tool 2 in the first direction DR1 so that the probe 21 traverses the third region RG3 in which the gap between the second surface 82b and the second workpiece 9 gradually decreases to zero in the first direction DR1 (see FIG. 8).

In addition, the process of performing the friction stir welding for welding the first workpiece 8 and the second workpiece 9 together (the fourth step ST4) includes: controlling the position of the friction stir welding tool 2 in order to reduce the fluctuation in the axial load F received by the friction stir welding tool 2 from the first workpiece 8 and the second workpiece 9, when the probe 21 moves in the first direction DR1 traversing each the second region RG2 and the third region RG3.

Since the details of the process of performing the friction stir welding for welding the first workpiece 8 and the second workpiece 9 together (the fourth step ST4) have been described in the first embodiment or the second embodiment, its detailed description of the step will be omitted.

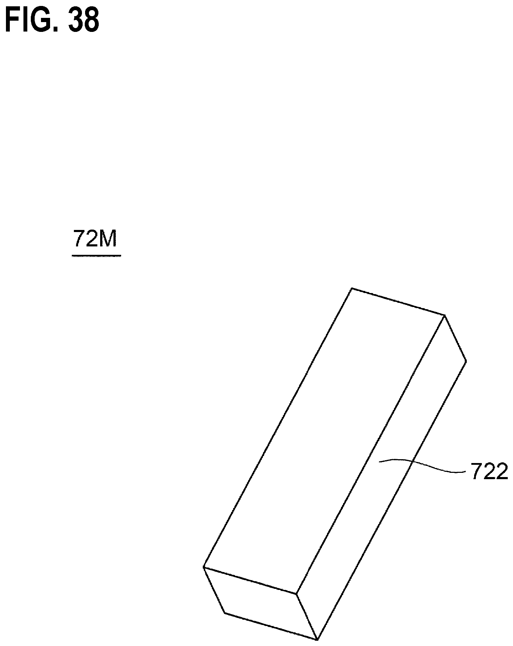

The memory 72 according to an embodiment may be a non-volatile storage medium that stores the above-described program 722 (more specifically, the program 722 including the first program 722a, the second program 722b, and the third program 722c). As illustrated in FIG. 38, the non-volatile storage medium that stories the above-described program 722 may be a portable storage medium 72M.

The present invention is not limited to the above-described embodiments or modifications, and it is apparent that each embodiment or each modification can be appropriately modified or changed within the scope of the technical idea of the present invention. In addition, various techniques used in each embodiment or each modification are applicable to another embodiment or another modification as long as a technical contradiction does not occur. Furthermore, any additional configuration in each embodiment or each modification can be omitted as appropriate.

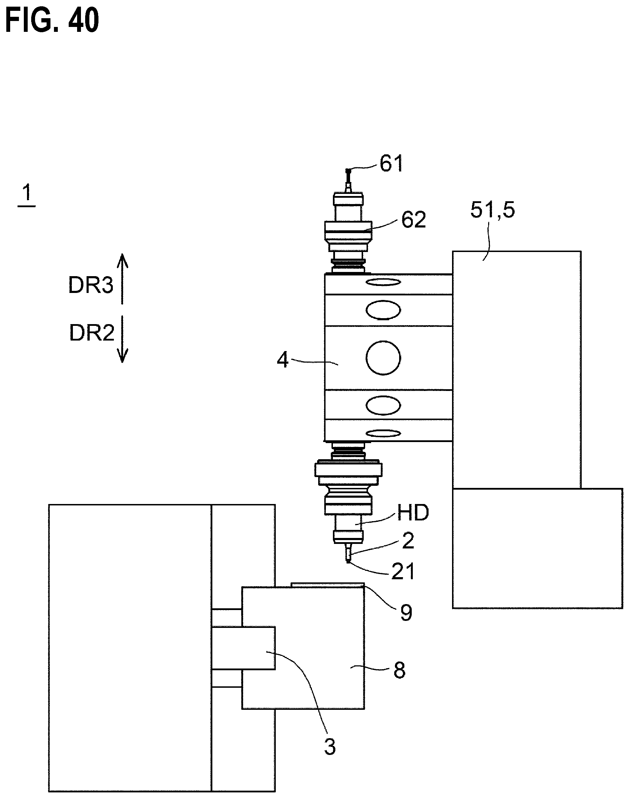

For example, FIGs. 17 to 20 and 32 illustrates an example in which the machine tool 1 is a vertical machining center. Alternatively, as illustrated in FIG. 39, the machine tool 1 according to an embodiment may be a horizontal machining center. Furthermore, alternatively, as illustrated in FIG. 40, the machine tool 1 according to an embodiment may be a lathe.

### Description of Reference Numerals

1, 1A, 1B ... Machine tool, 2 ... Friction stir welding tool, 3 ... Workpiece support member, 4 ... Machining head, 5 ... Mover, 7 ... Controller, 8 ... First workpiece, 8a ... Block, 8b, 8c, 8d ... Case body, 8u ... Upper surface, 9 ... Second workpiece, 9a, 9b, 9c, 9d, ... Plate, 9s ... Lower surface, 12, 12a, 12b, 12c ... Sensor, 13 ... Data receiver, 14 ... Communication interface, 18 ... Power receiver, 21 ... Probe, 23 ... Shoulder, 30 ... Base, 31 ... Table, 42 ... Rotation body, 43 ... Frame, 44 ... Rotation drive, 44m ... Motor, 48 ... Power feeder, 51 ... First mover, 51a ... First moving body, 51b ... First drive, 52a ... Support body, 52b ... Second drive, 58 ... Second mover, 58b ... Third drive, 61 ... Cutting tool, 62 ... Tool holder, 70 ... Hardware processor, 71a ... First controller, 71b ... Second controller, 72 ... Memory, 72M ... Storage medium, 74 ... Communication circuit, 76 ... Input device, 78 ... Bus, 81 ... Recessed portion, 81e ... End portion on fourth direction side, 81f ... End portion on fifth direction side, 82 ... Surface, 82a ... First surface, 82b ... Second surface, 82c ... Third surface, 83 ... First section, 84a ... First stepped portion, 84b ... Second stepped portion, 85 ... Recess, 86 ... Second section, 87 ... Welded portion, 88a ... First piece, 88b ... Second piece, 91 ... Portion facing recessed portion, 91u ... Flat surface, 91v ... Recessed surface, 100 ... Automatic tool changer, 101 ... Tool change arm, 104 ... Arm rotation device, 106 ... Arm mover, 110 ... Stocker, 114 ... Holder remover, 722 ... Program, 722a ... First program, 722b ... Second program, 722c ... Third program, 726a ... First path data, 726b ... Second path data, 762 ... Display equipped with touch panel, AX ... Rotation axis, AX1 ... First axis, AX2 ... Second axis, C ... Movement command, C1 ... First movement command, C2 ... Second movement command, C3 ... Third movement command, C4 ... Movement command, CS1 ... Inclined surface, CS2 ... Inclined surface, D ... Welded product, D2 ... Battery case, D3 ... Inverter case, D4 ... Motor case, F ... Axial load, G2, G3, G4 ... Gap, HD ... Probe holder, OP ... Opening, PA... First movement path, PA1 ... Linear path, PA2 ... Curved path, PA3 ... Arc-shaped path, PB ... Second movement path, PS1 ... Inclined surface, PS2 ... Inclined surface, R ... Rotation command, R1 ... First rotation command, R2 ... Second rotation command, RG1 ... First region, RG2 ... Second region, RG3 ... Third region, RG4 ... Fourth region, RG5 ... Fifth region, S1 ... Signal data, S2 ... Data indicating drive current value of motor

## Claims

1. A friction stir welding method comprising steps of:
preparing a first workpiece including a recessed portion defined by a plurality of surfaces including a first surface and a second surface, the first surface having a height gradually decreasing in a first direction, the second surface having a height gradually increasing in the first direction;
preparing a second workpiece;
overlaying the first workpiece with the second workpiece to form a first region in which the first workpiece and the second workpiece are in contact with each other, a second region in which a gap between the first surface and the second workpiece gradually increases from zero in the first direction, and a third region in which another gap between the second surface and the second workpiece gradually decreases to zero in the first direction; and
performing friction stir welding for welding the first workpiece and the second workpiece together using a friction stir welding tool,
wherein the step of performing the friction stir welding for welding the first workpiece and the second workpiece together comprises:
moving the friction stir welding tool in the first direction for a probe of the friction stir welding tool to traverse at least part of the first region;
moving the friction stir welding tool in a second direction to follow a change in the height of the first surface, in a case where a depth direction of the recessed portion is defined as the second direction, while moving the friction stir welding tool in the first direction for the probe to traverse the second region; and
moving the friction stir welding tool in a third direction to follow a change in the height of the second surface, in a case where a direction opposite to the second direction is defined as the third direction, while moving the friction stir welding tool in the first direction for the probe to traverse the third region, and
wherein a position of the friction stir welding tool is controlled to reduce a fluctuation in an axial load received by the friction stir welding tool from the first workpiece and the second workpiece, when the probe moves in the first direction traversing each the second region and the third region.

2. The friction stir welding method according to claim 1, wherein when the probe moves in the first direction traversing each the second region and the third region, the position of the friction stir welding tool is controlled to keep the axial load constant.

3. The friction stir welding method according to claim 1 or 2, further comprising a steps of:
detecting, by a sensor, the axial load; and
receiving, by a controller, signal data indicating the axial load from the sensor,
wherein the controller compensates the position of the friction stir welding tool to the second direction in accordance with a decrease in the axial load when the probe traverses the second region, and
wherein the controller compensates the position of the friction stir welding tool to the third direction in accordance with an increase in the axial load when the probe traverses the third region.

4. The friction stir welding method according to claim 1 or 2, further comprising a step of
acquiring, by a controller, a load applied to a motor that drives rotation of the probe about a rotation axis,
wherein the controller compensates the position of the friction stir welding tool to the second direction in accordance with a decrease in the load when the probe traverses the second region, and
wherein the controller compensates the position of the friction stir welding tool to the third direction in accordance with an increase in the load when the probe traverses the third region.

5. The friction stir welding method according to one of claims 1 to 4,
wherein the plurality of surfaces that define the recessed portion comprises the first surface, the second surface, and a third surface disposed between the first surface and the second surface, the third surface having a constant height,
wherein the step of overlaying the first workpiece with the second workpiece comprises forming a fourth region disposed between the second region and the third region, and
wherein the step of performing the friction stir welding for welding the first workpiece and the second workpiece together comprises moving the probe to sequentially traverse the second region, the fourth region, and the third region.

6. The friction stir welding method according to one of claims 1 to 5,
wherein the step of preparing the first workpiece comprises:
cutting a first stepped portion between a first section of the first workpiece and a recess of the first workpiece to form the first surface; and
cutting a second stepped portion between a second section of the first workpiece and the recess of the first workpiece to form the second surface.

7. The friction stir welding method according to claim 6,
wherein the first workpiece comprises a welded portion, and
wherein the step of preparing the first workpiece comprises cutting the welded portion and a part around the welded portion to form the recess.

8. The friction stir welding method according to one of claims 1 to 6,
wherein the first workpiece comprises a welded portion, and
wherein the step of preparing the first workpiece comprises cutting the welded portion and a part around the welded portion to form the first surface and the second surface.

9. The friction stir welding method according to one of claims 1 to 8,
wherein the friction stir welding tool comprises a shoulder that presses a surface on a third direction side of the second workpiece, and
wherein when the probe moves in the first direction traversing the second region, both the probe and the shoulder move in the second direction to follow the change in the height of the first surface.

10. A production method of an automotive component, the production method comprising steps of:
preparing a first component including a recessed portion defined by a plurality of surfaces including a first surface and a second surface, the first surface having a height gradually decreasing in a first direction, the second surface having a height gradually increasing in the first direction;
preparing a second component;
overlaying the first component with the second component to form a first region in which the first component and the second component are in contact with each other, a second region in which a gap between the first surface and the second component gradually increases from zero in the first direction, and a third region in which another gap between the second surface and the second component gradually decreases to zero in the first direction; and
performing friction stir welding for welding the first component and the second component together using a friction stir welding tool,
wherein the step of performing the friction stir welding for welding the first component and the second component together comprises:
moving the friction stir welding tool in the first direction for a probe of the friction stir welding tool to traverse at least part of the first region;
moving the friction stir welding tool in a second direction to follow a change in the height of the first surface, in a case where a depth direction of the recessed portion is defined as the second direction, while moving the friction stir welding tool in the first direction for the probe to traverse the second region; and
moving the friction stir welding tool in a third direction to follow a change in the height of the second surface, in a case where a direction opposite to the second direction is defined as the third direction, while moving the friction stir welding tool in the first direction for the probe to traverse the third region, and
wherein a position of the friction stir welding tool is controlled to reduce a fluctuation in an axial load received by the friction stir welding tool from the first component and the second component, when the probe moves in the first direction traversing each the second region and the third region.

11. The production method of the automotive component according to claim 10, wherein the first component is a case body that accommodates one of a battery, an inverter, or a motor, and
wherein the second component is a plate that covers an opening of the case body.

12. The production method of the automotive component according to claim 10 or 11,
wherein the recessed portion extends in a fourth direction perpendicular to the second direction, and
wherein in a case where a direction opposite to the fourth direction is defined as a fifth direction, at least one of an end portion on a fourth direction side of the recessed portion or an end portion on a fifth direction side of the recessed portion is open with the second component overlaid with the first component.

13. A machine tool comprising:
a workpiece support member configured to support a first workpiece and a second workpiece;
a machining head configured to support a probe of a friction stir welding tool to be rotatable about a rotation axis;
a rotation drive configured to rotate the probe about the rotation axis;
a mover configured to move the machining head relative to the workpiece support member; and
a controller configured to control the rotation drive and the mover,
wherein the controller is capable of performing a friction stir welding mode of performing friction stir welding for welding the first workpiece and the second workpiece together with the second workpiece overlaid on the first workpiece, the first workpiece including a recessed portion defined by a plurality of surfaces including a first surface and a second surface, the first surface having a height gradually decreasing in a first direction, the second surface having a height gradually increasing in the first direction,
wherein the friction stir welding mode comprises:
moving the friction stir welding tool in the first direction for the probe to traverse at least part of a first region in which the first workpiece and the second workpiece are in contact with each other;
moving the friction stir welding tool in a second direction to follow a change in the height of the first surface, in a case where a depth direction of the recessed portion is defined as the second direction, while moving the friction stir welding tool in the first direction for the probe to traverse a second region in which a gap between the first surface and the second workpiece gradually increases from zero in the first direction; and
moving the friction stir welding tool in a third direction to follow a change in the height of the second surface, in a case where a direction opposite to the second direction is defined as the third direction, while moving the friction stir welding tool in the first direction for the probe to traverse a third region in which another gap between the second surface and the second workpiece gradually decreases to zero in the first direction, and
wherein the controller controls a position of the friction stir welding tool to reduce a fluctuation in an axial load received by the friction stir welding tool from the first workpiece and the second workpiece, when the probe moves in the first direction traversing each the second region and the third region.

14. The machine tool according to claim 13,
wherein the controller is capable of performing a recessed portion forming mode of moving a cutting tool in a rotating state along a second movement path to form the recessed portion on the first workpiece, and
wherein the friction stir welding mode comprises moving the probe in the rotating state along a first movement path that traverses the recessed portion.

15. A program for causing a machine tool to perform a friction stir welding method comprising steps of:
preparing a first workpiece including a recessed portion defined by a plurality of surfaces including a first surface and a second surface, the first surface having a height gradually decreasing in a first direction, the second surface having a height gradually increasing in the first direction; and
performing friction stir welding for welding the first workpiece and a second workpiece together using a friction stir welding tool with the first workpiece and the second workpiece overlaid with each other,
wherein the step of preparing the first workpiece comprises forming the recessed portion using a cutting tool,
wherein the step of performing the friction stir welding for welding the first workpiece and the second workpiece together comprises:
moving the friction stir welding tool in the first direction for a probe of the friction stir welding tool to traverse at least part of a first region in which the first workpiece and the second workpiece are in contact with each other;
moving the friction stir welding tool in a second direction to follow a change in the height of the first surface, in a case where a depth direction of the recessed portion is defined as the second direction, while moving the friction stir welding tool in the first direction for the probe to traverse a second region in which a gap between the first surface and the second workpiece gradually increases from zero in the first direction; and
moving the friction stir welding tool in a third direction to follow a change in the height of the second surface, in a case where a direction opposite to the second direction is defined as the third direction, while moving the friction stir welding tool in the first direction for the probe to traverse a third region in which another gap between the second surface and the second workpiece gradually decreases to zero in the first direction, and
wherein the step of performing the friction stir welding for welding the first workpiece and the second workpiece together comprises:
controlling a position of the friction stir welding tool to reduce a fluctuation in an axial load received by the friction stir welding tool from the first workpiece and the second workpiece, when the probe moves in the first direction traversing each the second region and the third region.
